# EUROPÄISCHE PATENTSCHRIFT

(11) **EP 1 825 752 B1**
(45) Veröffentlichungstag und Bekanntmachung des Hinweises auf die Patenterteilung: **18.11.2009**
(21) Anmeldenummer: 07003274.3
(22) Anmeldetag: 16.02.2007
(51) Int. Cl.: A01N 43/16, A01N 31/14, A01N 33/12, A01N 25/08, A01P 1/00, C09D 5/14, C09D 5/16

(54) **Beschichtungszusammensetzung, aus SiO2-erzeugendem Mittel, mit wenigstens zwei antibakteriellen Wirkstoffen**
Coating compound made of an agent which generates SiO2 with at least two antibacterial agents
Composition de revêtement en matériau produisant du SiO2, comrenant au moins un agent actif antimicrobien

(30) Priorität: 22.02.2006 DE 102006008535
(43) Veröffentlichungstag der Anmeldung: 29.08.2007
(73) Patentinhaber: Stiftung nano innovations -for a better living, 4600 Olten/Kanton Solothurn (CH)
(72) Erfinder: Jürgens, Ralf, 24558 Henstedt-Ulzburg (DE); Schwindt, Sascha, 66121 Saarbrücken (DE)
(74) Vertreter: Sieckmann, Ralf

(56) Entgegenhaltungen:
- EP-A- 1 736 178
- DE-A1-102004 014 483
- DE-U1-202004 019 687
- DE-U1-202005 006 784
- US-A- 5 348 799
- US-A1- 2004 134 384
- US-B1- 6 306 835

## Beschreibung

Die Erfindung betrifft eine antibakterielle Beschichtungszusammensetzung, auf Basis eines Siliziumdioxiderzeugenden Mittels, ein Anwendungsset, eine nanoskalige Beschichtung auf der Basis von polymerisiertem SiO₂, die Herstellung der Beschichtung, die Weiterverarbeitung der Beschichtung sowie eine Vielzahl von Verwendungen, wie nachstehend näher erläutert.

### Stand der Technik

Die DE 102004014483 A1 betrifft eine poröse anorganische Oxidschicht mit mindestens einem darin enthaltenen kationischen Polysaccharid. Hier wird als biozider Wirkstoff Chitosan, Chitosansalze, ein kationisches Chitosanderivat mit amino und ammoniumfunkunktionellen Gruppen und ein alkyl oder acylmodiziziertes Chitosan genannt. Von der vorliegenden Erfindung unterscheidet sich diese Druckschrift durch die andersartige Oberflächenstruktur, die nichtporös ist und u. a. deacetylierte Chitosanderivate einsetzt.

US 6306835 A1 beschreibt 3-Trimethylammonium-2-hydroxypropyl-N-chitosan (CHI-Q188) als antimikrobiellen Wirkstoff. Es wird beschrieben, dass zur Herstellung homogener, transparenter Schichten der Einsatz rein wässriger Nanosole von Vorteil ist, da in diesen die antimikrobiellen kationischen Polysaccharide gut löslich sind. Darum ist es vorgesehen, dass die zunächst gebildeten alkoholischen Nanosole durch schonende Entfernung des Alkohols in wässrige Nanosole umgewandelt werden.

Die DE 20 2004 019 687 A1 betrifft gemäß Ansprüchen den Einsatz von Partikeln, deren Oberfläche wenigstens teilweise aus metallischem Silber bestehen, mit einem Durchmesser von weniger als 100 nm, und, welche als Klarlack ausgebildet sind. Bei den beschriebenen Schichten handelt es sich im Wesentlichen um wesentlich dickere Lackschichten im Bereich von 1 µm bis 100 µm.

DE 20 2005 006 784 A1 beschreibt eine nach dem Sol-Gel-Prozess hergestellte, poröse Sol-Gel-Beschichtung mit antimikrobiell wirksamen Substanzen / Verbindungen die ausgewählt sind aus der Gruppe, bestehend aus Ag, Zn, Cu, Sn, I, Te, Gr, Cr, deren Ionen sowie deren Verbindungen und Mischungen hiervon, insbesondere silberorganische Verbindungen, silberanorganischen Verbindungen, zinkorganischen Verbindungen, zinkanorganischen Verbindungen sowie deren Salze und Oxide. Diese Verbindungen sind nicht Gegenstand der vorliegenden Erfindung. Ferner beschreibt diese Offenlegungsschrift das Vorhandensein von Kohlenstoff in nachweisbarer Menge in der Sol-Gel-Schicht, wann hier ebenfall nicht erwünscht ist.

Der Nachteil der vorher beschriebenen antimikrobiellen Substanzen im Stand der Technik liegt im Falle der kationischen Polysaccharide in der nur auf negativ geladenen Oberflächen von Bakterien eingeschränkte Wirkung, kationische oder nichtionische Mikroorganismen werden nur unzureichend am Wachstum gehindert bzw. abgetötet. Nach neuesten Untersuchungen stellt sich bei bestimmten mikrobiellen Organismen eine Resistenz gegen Silberionen ein, die Wirksamkeit der antimikrobiellen Komponente lässt also nach wenigen Wochen nach, von einer dauerhaften antimikrobiellen Wirkung kann also nicht die Rede sein.

Nachteile der in DE 20 2005 006 784 A1 beschriebenen metallorganischen Verbindungen sind ihre stark umweltbelastende Wirkung, da auf Grund der porösen Struktur der Sol-Gel-Beschichtung eine Erosion und somit ein Eintrag in die Umwelt nicht ausgeschlossen sind. Diese Wirkstoffe werden zunehmend in der Nahrungskette bis hin zum Menschen gefunden und sind damit in hohem Masse schädlich für die Menschen und die Umwelt. Tributylzinn ist erbgutschädigend.

Es ist bereits bekannt, antibakterielle bzw. antimikrobielle Wirkstoffe zur Vernichtung bzw. Wachstumshemmung von Bakterien, Pilzen, Algen und Viren und zum Schutz von Materialien und Lebensmitteln gegen mikrobielle Verunreinigung einzusetzen. Die umgebungsbedingte, mikrobielle Kontamination durch ca. 2 bis 3 Milliarden unterschiedlicher Mikroorganismen, davon allein ca. 15.000, die sich über die Luft ausbreiten und somit nahezu jede Oberfläche besiedeln können, stellt ein stetig wachsendes gesundheitliches Gefährdungspotenzial dar. Im Folgenden wird für die Wirkung der Substanzen der Begriff "antimikrobiell" verwendet, damit ist insbesondere die biozide bzw. biostatische Wirkung auf Mikroorganismen gemeint.

Es ist bekannt, Sol-Gel-Schichten mittels eines Sol-Gel-Prozesses zu erzeugen. Dabei werden vorzugsweise Metalloxid-Xerogele aus SiO₂, R-SiOₙ, R₂SiOₙ, Al₂O₃, ZrO₂, TiO₂ oder deren Gemische verwendet, wobei R = H, Alkyl, Aryl, Epoxi-alkyl, Aminoalkyl- und n = 1,5 oder 1 sein kann. Diese Gele erhält man durch die Hydrolyse und Kondensationsreaktionen von Siliziumalkoxiden. Dabei werden die Moleküle auf Grund der während des Prozesses stattgefundenen Polymerisation miteinander verbunden. Das gesamte Volumen der Sole wird dabei polymerisiert. Die polymerisierten Siliziumoxide bilden ein SiO₂-Gel (vergl. J.C. Brinker, G.W. Scherer, Sol-Gel Science, Academic Press, London 1990).

Die fortlaufende Kondensation unter Alkoholabspaltung führt zu einem sphärischen Anwachsen der Partikel, was sich ab einer Dicke von ca. 70 nm auf Grund der Lichtstreuung an den Partikeln (Tyndall-Effekt) nachweisen lassen. Durch einen als Gelierung bezeichneten Vorgang können Sole in Gele übergehen. Die Partikel wachsen weiter, bis sie sich berühren und durch weitere Kondensation miteinander vernetzen. Letztendlich bildet sich dabei eine feste Phase aus, die mit einer flüssigen Phase durchdrungen ist. Als Gele werden formbeständige, leicht deformierbare, an Flüssigkeit reiche disperse Systeme bezeichnet, die aus einem festen, unregelmäßigen dreidimensionalen Netzwerk und einer Flüssigkeit bestehen.
Zur Funktionalisierung werden dem Sol aus Tetraethoxysilan zum einen aliphatische und aromatische Aldehyde, Carbonsäuren oder Aminocarbonsäuren zugesetzt. Alternativ wird durch veränderte Substituenten am Precursor (R'Si(OC₂H₅)₃) das SiO₂-Netzwerk organisch modifiziert. Ebenfalls wird dafür die Synthese verschiedener Alkyltriethoxysilane mit Azomethinbindung durch die Umsetzung von Aminopropyltriethoxysilan mit Benzaldehydderivaten bzw. Acetylaceton genutzt.
Anorganisch-oxidische Gele werden häufig durch Umsetzung von Elementalkoxiden mit Alkohol-Wasser-Mischungen oder in reinem Wasser hergestellt. Der Alkohol dient hierbei der Erzeugung eines homogenen Reaktionsgemisches und kann durch andere protische oder aprotische Lösungsmittel ersetzt werden. Die Flexibilität und Porosität der Sol-Gel-Schichten lassen sich durch Modifikation der Rezepturen verändern. Ein höherer Anteil von R-SiOₙ und/oder R₂SiOₙ verbessert die Flexibilität der Schichten, durch die Bildung von Mischoxiden wie Al₂O₃, ZrO₂, TiO₂ kann die Abrasionsbeständigkeit und spezifische Härte verstärkt werden.

### Erfindung

### Antibakterielle Beschichtungszusammensetzung

Eine Aufgabe der Erfindung ist es zunächst, eine neuartige antibakterielle Beschichtungszusammensetzung bereitzustellen.

Diese Aufgabe wird durch die Kombination des Si02 erzeugenden Mittels zusammen mit speziellen Anteilen spezieller antimikrobieller Mittel gelöst, die aus einer Auswahl von zwei von drei unterschiedlichen Stoffklassen erfolgt.

Die Erfindung betrifft so eine antibakterielle Beschichtungszusammensetzung, enthaltend 50 Gew-% bis 99,9 Gew-%, vorzugsweise 80 Gew-% bis 99 Gew-%, eines SiO₂-erzeugenden Mittels, wobei die Beschichtungszusammensetzung 0,1 Gew-% bis 50 Gew-%, vorzugsweise 1 Gew-% bis 20 Gew-%, bezogen auf die Gesamtzusammensetzung, antibakterielle Wirkstoffe enthält, wobei der antibakteriellen Wirkstoffe ausgewählt sind aus wenigstens 2 Verbindungen der 3 nachstehenden Verbindungsklassen in Form von kationischen, anionischen oder nichtionischen deacetylierten Chitosanen und Chitosanderivaten und/oder Phenolen der Gruppe der halogenierten Dihydroxydiphenylmethane, -sulfide, und -ether und / oder substituierten quartären Ammoniumsalze der alkylierten Phosphorsäure.

Die US 20041134384 A1, EP-A-1 736 178, US-A-5 348 799 und die DE 10 2004 014483 A1 betreffen Beschichtungszusammensetzungen, enthaltend ein Si0₂ erzeugendes Mittels und Chitosan als antibakteriellen Wirkstoff, nicht aber die Verwendung einer Mischung von Wirkstoffen aus wenigstens 2 der in Anspruch 1 genannten antibakteriellen Verbindungsklassen. Wie in den Vergleichsversuchen der prioritätsbegründenden Anmeldung DE 10 2006 008 535, ersichtlich ist (siehe Fig. 4 und die Figurenbeschreibung) zeigen die beanspruchten Mischungen, welche zwei bzw. drei antimikrobielle Wirkstoffe enthalten, eine verbesserte Wachstumshemmung von Bakterien gegenüber Si0₂Chitosan allein.

Eine weitere bevorzugte Ausführungsform der vorliegenden Erfindung betrifft eine Zusammensetzung der vorbeschriebenen Art, bei der das SiO₂-erzeugenden Mittel ausgewählt ist aus
➢ 0 bis 100 Gew-%, vorzugsweise 1 bis 99 Gew-% Tetraethoxysilan,
➢ 0 bis 100 Gew-%, vorzugsweise 1 bis 99 Gew-% Trimethoxymethylsilan und
➢ 0 bis 100 Gew-%, vorzugsweise 1 bis 99 Gew-% Dimethoxydimethylsilan.

Eine weitere bevorzugte Ausführungsform der vorliegenden Erfindung betrifft eine Zusammensetzung der vorbeschriebenen Art, bei der das SiO₂ erzeugende Mittel weiterhin bis zu 20 Gew-% Al₂O₃, TiO₂, ZrO₂, MgO und /oder V₂O₅ enthält, wobei diese Zusatzstoffe in beliebigen Mischungsverhältnissen zugegen sind, vorzugsweise in Mischungsverhältnissen zwischen 0,1 Gew-% und 50 Gew-% aus der Gruppe der Al₂O₃, TiO₂, ZrO₂, MgO und V₂O₅, besonders bevorzugt in Mischungsverhältnissen zwischen 1 Gew-% und 20 Gew-% aus der Gruppe der Al₂O₃, TiO₂ und ZrO₂.

Eine weitere bevorzugte Ausführungsform der vorliegenden Erfindung betrifft eine Zusammensetzung der vorbeschriebenen Art, bei der der Wirkstoff als halogenierte Dihydroxydiphenylmethan, -sulfid und -ether ausgewählt ist aus 5,5'-Dichlor-2,2'-dihydroxy-diphenylmethan, 3,5,3',5'-Tetrachlor-4,4'-dihydroxy-diphenylmethan, 3,5,6,3',5',6'-Hexachlor-2,2'-dihydroxy-diphenylmethan, 5,5'-Dichlor-2,2'-dihydroxy-diphenylsulfid, 2,4,5,2'4',5' Hexachlordihydroxydiphenylsulfid, 3,5,3',5'-Tetrachlor-2,2'-Dihydroxy-diphenylsulfid, 4,4'-Dihydroxy-2,2'dimethyl-diphenylmethan, 2'2-Dihydroxy-5',5-diphenylether oder 2,4,4'Trichlor-2'-hydroxy-diphenylether.

Diese Phenole sind erhältlich als 5,5'-Dichlor-2,2'-dihydroxy-diphenylmethan (Preventol DD, Bayer AG), 3,5,3',5'-Tetrachlor-4,4'-dihydroxy-diphenylmethan (Monsanto Corporation), 3,5,6,3',5',6'-Hexchlor-2,2'-dihydroxy-diphenylmethan (Hexachlorophen), 5,5'-Dichlor-2,2'-dihydroxy-diphenylsulfid (Novex, Boehringer Mannheim), 2,4,5,2',4',5'Hexachlor- dihydroxy-diphenylsulfid, 3,5,3',5'-Tetrachlor-2,2'-Dihydroxy-diphenylsulfid (Actamer, Monsanto), 4,4'-Dihydroxy-2,2'dimethyl-diphenylmethan, 2'2-Dihydroxy-5',5-diphenylether (Unilever), 2,4,4'Trichlor-2'-hydroxy-diphenylether (Irgasan DP 300, Ciba-Geigy).

Eine weitere bevorzugte Ausführungsform der vorliegenden Erfindung betrifft eine Zusammensetzung der vorbeschriebenen Art, bei der es sich bei dem Phenol um 2,4,4'Trichlor-2'-hydroxy-diphenylether handelt.

Eine weitere bevorzugte Ausführungsform der vorliegenden Erfindung betrifft eine Zusammensetzung der vorbeschriebenen Art, bei den es sich bei den Wirkstoffen um kationischen, anionischen oder nichtionischen deacetylierten Chitosane und Chitosanderivate handelt, vorzugsweise um Trimethylchitosaniumchlorid, das Dimethyl-*N-_{C2. bis C12}*-alkylchitosaniumiodid, quartäre Chitosansalze mit Anionen der Phosphorsäure, O-Carboxymethylchitin-Natriumsalze, *O*-Acylchitosan, *N,O-*Acylchitosan, *N*-3-Trimethylammonium-2-hydroxypropyl-chitosan und *O*-TEAE-Chitiniodid.

Eine weitere bevorzugte Ausführungsform der vorliegenden Erfindung betrifft eine Zusammensetzung der vorbeschriebenen Art, bei der die Chitosane und Chitosanderivate niedermolekulare Chitosane und Chitosanderivate sind, wobei die Molekulargewichte zwischen 1,0 x 10⁵ g/mol und 3,5 x 10⁶ g/mol, vorzugsweise zwischen 2,5 x 10⁵ g/mol und 9,5 x 10⁵ g/mol liegen.

Eine weitere bevorzugte Ausführungsform der vorliegenden Erfindung betrifft eine Zusammensetzung der vorbeschriebenen Art, bei der die Wirkstoffe quartäre Ammoniumsalze der alkylierten Phosphorsäure sind, wobei jeder der Alkylreste, unabhängig voneinander 1 bis 12 Kohlenstoffatome aufweist und / oder halogenierte Ammoniumsalze, vorzugsweise das Cetyltrimethylammoniumbromid, das Didecyldimethylammoniumchlorid, das Hexadecylpyridiniumchlorid und das Polyoxyalkyltrialkylammoniumchlorid. Bei diesen substituierten quartären Ammoniumsalzen der alkylierten Phosphorsäure, ist deren biostatische Wirkung in zahlreichen Veröffentlichungen dokumentiert. Wegen der sehr guten Wasserlöslichkeit dieser Salze ist ihre Einbindung in die SiO₂-Matrix besonders vorteilhaft. Auch halogenierte quartäre Ammoniumsalze wie das Cetyltrimethylammoniumbromid, haben ihre antimikrobielle Wirkung unter Beweis gestellt und können in der SiO₂-Matrix zum Einsatz kommen.

Eine weitere bevorzugte Ausführungsform der vorliegenden Erfindung betrifft eine Zusammensetzung der vorbeschriebenen Art, bei der die mikrobiellen Wirkstoffe in Mischungsverhältnissen zwischen 0,1 Gew-% bis 99,9 Gew-%, vorzugsweise 1 Gew-% bis 99 Gew-%, insbesondere 5 Gew-% bis 95 Gew-% vorliegen.

Das Mischungsverhältnis der antimikrobiellen Wirkstoffe Chitosan, 2,4,4'Trichlor-2'-hydroxy-diphenylether (Triclosan) und quartäre Ammoniumsalze in der Sole untereinander sollte wie folgt eingestellt werden. In Summe können die antimikrobiellen Wirkstoffe zwischen 0,1 Gew-% und 50 Gew-%, vorzugsweise 1 bis 20 % bezogen auf die Gesamtzusammensetzung der Sole ausmachen. Der Anteil der jeweiligen antimikrobiellen Wirkstoffe kann dabei zwischen 1 Vol-% und 98 Vol-% liegen. Durch unterschiedliche Rezepturen (Mengenanteile) kann die antimikrobielle Wirkung auf die jeweilige Mikrobenpopulation zum Zweck der höchsten Wirkung eingestellt werden.

Eine weitere bevorzugte Ausführungsform der vorliegenden Erfindung betrifft eine Zusammensetzung der vorbeschrieben Art weiterhin enthaltend übliche Hilfs- und Zusatzstoffe, insbesondere saure und basische Polykondensations-Katalysatoren und / oder Flouridionen.

Weiter liegt der Erfindung die Aufgabe zugrunde, ein Anwendungsset bereitzustellen, das sowohl bei industrieller Anwendung wie auch im Do it yourself Bereich Anwendung findet.

Diese Aufgabe wird durch die Auswahl der Beschichtungszusammensetzung zusammen mit speziellen Applikationsmittel gelöst.

Die Erfindung betrifft daher weiter ein Anwendungsset, enthaltend die Zusammensetzung der vorbeschriebenen Art zusammen mit Applikationsmitteln zur Reinigung und Vorbereitung der zu beschichtenden Substrate, sowie in Form von individuell verpackten Sachet-Tüchern. Die vorgenannten Applikationsmittel können Gebindegrößen zwischen 0,25 I bis 800 I umfassen

### Nanoskalige Beschichtung auf Träger

Der Erfindung liegt weiter die Aufgabe zugrunde, eine nanoskalige, und antimikrobielle, insbesondere biozide Beschichtung auf Basis einer anorganisch polymerisierten SiO₂-Schicht auf beliebigen organischen oder anorganischen Trägern zu schaffen, die anders als die Schichten im Stand der Technik nicht porös sind und zudem sowohl hydrophob wie auch oleophob ist.

Diese Aufgabe wird durch die Kombination des SiO₂ erzeugenden Mittels zusammen mit speziellen Anteilen spezieller antimikrobieller Mittel gelöst, die aus drei unterschiedlichen Stoffklassen allein oder vorzugsweise als Kombination von wenigstens zwei Stoffklassen erfolgt.

Die Erfindung betrifft daher weiterhin eine nanoskalige, insbesondere 50 nm bis 500 nm, vorzugsweise zwischen 120 nm und 250 nm dicke antibakterielle Beschichtung, enthaltend eine nicht poröse anorganische polymerisierte SiO₂-Schicht, aufgebracht auf ein Trägermaterial, wobei die Beschichtung 0,1 Gew-% bis 50 Gew-%, vorzugsweise 1 Gew-% bis 20 Gew-%, bezogen auf die Gesamtzusammensetzung, wenigstens eines antibakteriellen Wirkstoffs in Form von kationischen, anionischen oder nichtionischen deacetylierten Chitosanen und Chitosanderivaten und/oder Phenolen der Gruppe der halogenierten Dihydroxydiphenylmethane, -sulfide, und -ether und / oder substituierten quartären Ammoniumsalze der alkylierten Phosphorsäure enthält, wobei der antibakterielle Wirkstoff ausgewählt aus wenigstens 2 Verbindungen der 3 nachstehenden Verbindungsklassen in Form von kationischen, anionischen oder nichtionischen deacetylierten Chitosanen und Chitosanderivaten und/oder Phenolen der Gruppe der halogenierten Dihydroxydiphenylmethane, -sulfide, und -ether und / oder substituierten quartären Ammoniumsalze der alkylierten Phosphorsäure.

Die Schichten können in unterschiedlichen Dicken von 50 nm bis 500 hergestellt werden, vorzugsweise jedoch in Schichten zwischen 120 nm und 250 nm, da die im Sprühverfahren verwendeten SiO₂-Nanopartikel auf die nichtlungengängige Größe von > 100 nm eingestellt werden.

Auch bevorzugt ist eine Beschichtung der vorbeschriebenen Art, bei der die SiO₂-Schicht wenigstens teilweise aus R-SiOₙ, und/oder R₂-SiOₙ besteht, wobei R = H, Alkyl, Aryl-, Epoxy-alkyl- oder Aminoalkyl- und n = 1,5 oder größer ist.

Auch bevorzugt ist eine Beschichtung der vorgenannten Art, bei der die SiO₂ Schicht Al₂O₃, TiO₂, ZrO_{2,} MgO und /oder V₂O₅ in beliebigen Mischungsverhältnissen enthält, vorzugsweise in Mischungsverhältnissen zwischen 0,1 Gew-% und 50 % Gew-% aus der Gruppe der Al₂O₃, TiO₂, ZrO₂, MgO und V₂O₅, besonders bevorzugt in Mischungsverhältnissen zwischen 1 Gew-% und 20 Gew-% aus der Gruppe der Al₂O₃, TiO₂ und ZrO₂.

Die Vorteile der erfindungsgemäßen antimikrobiellen Beschichtung bzw. Oberflächenveredelung bestehen im Wesentlichen aus den folgenden Punkten:
1. Sehr hohe Hydrophobie- und Oleophobiewerte, vergleichbar mit den Werten von Beschichtungen, die mittels Fluor-Carbon-Harzen erzeugt werden. Damit einher geht eine extrem starke antiadhäsive Wirkung, die die des PTFE noch übertrifft, es werden Kontaktwinkel von 139,5 ° erzielt (Institut Hohenstein). Dies ist vorteilhaft, um die Erstbesiedlung der Oberflächen durch Mikroorganismen zu verhindern, die vor der Besiedlung des Substrates durch die Abgabe eines klebrigen Sekrets quasi testen, ob die Fläche für eine Besiedlung geeignet ist. Da dieses Sekret auf der oleophoben Fläche kaum haften bleibt, kommt es in vielen Fällen erst gar nicht zu einer Besiedlung und in Folge zu einer Koloniebildung.
2. Die sehr gut haftende Beschichtung lässt sich wegen der sehr guten duktilen Eigenschaften auf Substrate unterschiedlichster Geometrie und Beschaffenheit auftragen.
3. Die SiO₂-Matrix (Glas) ist sehr abrasionsbeständig und zeichnet sich durch nicht messbaren Abrieb und eine sehr große Härte aus. Auf Grund der ultradünnen Schichten von < 250 nm behält die Glasschicht ihre sehr guten flexiblen Eigenschaften.
4. Die Immobilisierung der antimikrobiellen Wirkstoffe verhindert die Eluierung und Verdünnung der Wirkstoffe und somit ein Abnehmen der antibakteriellen Wirkung.
5. Die Beschichtungszusammensetzung besteht aus nicht-toxischen Verbindungen, die biologisch abbaubar sind. Silikate wie das SiO₂ sind die am häufigsten vorkommenden Verbindungen der Erdkruste.
6. Mit unterschiedlichsten Textilien wurden Waschversuche zur Ermittlung der Permanenz der Beschichtung durchgeführt. Dabei wurde eine Forderung der Textilindustrie nach einer Waschbeständigkeit von > 50 Wäschen durchgehend erzielt, vorausgesetzt, dass das Substrat ebenfalls nach dieser Anzahl Waschvorgänge nicht degradiert ist.
7. Durch die Mischung unterschiedlichster antimikrobieller Substanzen kann ein Breitband-Antimikrobiotikum hergestellt werden, dass geeignet ist, auch stark heterogene Populationen zu bekämpfen. Die Rezeptur kann den jeweiligen ambienten Anforderungen angepasst werden. So ist es möglich, spezielle Rezepturen für Textilien, für hygiene-sensitive Oberflächen in Krankenhäusern, für Atemluftfilter oder für aquatische Umgebungen herzustellen und dadurch die optimale Wachstumsblockade zu erzielen. Weiter wird das Ausbilden von Resistenzen (z.B. MRSA) verhindert.

Weiterer Gegenstand der Erfindung ist eine Beschichtung der vorgenannten Art als Beschichtung für harte Oberflächen, insbesondere als Antifouling-Mittel.

### Antifoulingbeschichtung

Aufgabe der Erfindung ist es ebenfalls, eine neuartige Antifouling-Beschichtung bereitzustellen, die die Nachteile vergleichbarer Beschichtungen nach dem Stand der Technik überwindet, hydro- und oleophobe Eigenschaften aufweist, so dass ein effektiver Schutz gefährdeter Oberflächen vor Anhaftung von Biopolymeren und Mikroorganismen , bei gleichzeitiger Schonung der Umwelt, gewährleistet ist und die für einen nachhaltigen Schutz abrasionsbeständig und damit wasserunbelastend ist.

Diese Aufgabe wird erfindungsgemäß dadurch gelöst, dass die Oberflächen eine polymerisierte SiO₂ -Matrix aufweist in welche antimikrobielle Wirkstoffe und/oder Metalloxide einlagerbar sind, wobei diese Wirkstoffe nicht-eluierbar und immobilisiert in die SiO₂-Matrix einbaubar ist.

Die Beschichtung ist aufgrund ihrer polymerisierten SiO₂ Matrix glasähnlich. Bei Verwendung in bewegtem Wasser resultiert hieraus eine hohe hydrodynamische Effizienz, die zu einer wirkungsvollen Selbstreinigung führt. Durch die SiO₂ Matrix ist die Beschichtung ferner abrasionsbeständig, kratz- und scheuerfest.

Dies ist die Verwendung der Beschichtungszusammensetzung der vorgenannten Art als Antifouling-Mittel für mit Wasser, insbesondere mit Meer- und Seewasser in Verbindung stehenden Oberflächen.

Eine weitere Aufgabe der Erfindung betrifft daher die Verwendung der Beschichtung für mit Wasser, insbesondere mit Meer- und Seewasser in Verbindung stehenden Oberflächen zum Schutz vor Biofouling hervorrufenden Biopolymeren und/oder Mikroorganismen sowie ein Verfahren zur Herstellung einer derartigen Beschichtung.

Oberflächen in aquatischen Lebensräumen sind der Bildung von klebrigen Biopolymeren ausgesetzt, die einen Biofoulingprozess einleiten. Unter Biofouling versteht man die Ablagerung lebender Organismen auf Materialoberflächen in wässriger Umgebung, die deren physikalische Oberflächeneigenschaften negativ beeinflussen. Jeder Foulingprozess im Wasser startet mit der Anheftung von organischen Molekülen an einer Oberfläche. Ihre Verfestigung ermöglicht die weitere Ansiedlung von Bakterien, Diatomeen, Muscheln und Krebsen etc. In mariner Umgebung erfährt jede Oberfläche Biofouling, was zu einem der größten Probleme bei den Oberflächen in der Marinetechnologie führt. Spezielle Oberflächenbeschichtungen, so genannte "Antifouling-Beschichtungen", sollen den Bewuchs an Schiffsrümpfen, Seewasserkonstruktionen, Ölplattformen, Hafenanlagen und Rohren, sowie an anderen künstlichen Unterwasserstrukturen verhindern. Es ist bekannt, Schiffsrümpfe, Ölplattformen und Hafenanlagen mit Antifouling-Beschichtungen zu versehen.

Die TRGS516 (Technische Regeln für Gefahrstoffe, Antifouling, Ausgabe 1996) gibt den Stand der sicherheitstechnischen, arbeitsmedizinischen, hygienischen sowie arbeitswissenschaftlichen Anforderungen an Gefahrstoffe hinsichtlich Inverkehrbringen und Umgang wieder. Sie regelt die Verwendung von sehr giftigen, giftigen und gesundheitsschädlichen Antifouling-Farben. Bekannte Antifouling-Beschichtungen beruhen entweder auf Formen der mechanischen Reinigung oder auf dem Entlassen von toxischen Bioziden aus Matrix-Beschichtungen oder auf einer Kombination von beidem. Zur mechanischen Reinigung werden durch die Verwendung von Teflon oder Silikon in der Beschichtung stark rutschige Oberflächen erzeugt, die die Anheftung von Foulingstoffen verhindern.

Außerdem unterscheidet man zwischen unlöslichen und löslichen Beschichtungen. Die unlöslichen Antifouling-Beschichtungen weisen eine hohe Abriebfestigkeit auf, lösliche Antifouling-Beschichtungen sind selbsterodierend und werden von strömendem Wasser langsam abgetragen. Bekannte Antifouling-Beschichtungen verhindern durch ihre Biozide die Besiedlungsphase des Foulingprozesses.

In der DE 101 17 945 wird eine biozidfreie Antifouling-Beschichtung beschrieben, die biomimetisch als duales Kompositsystem, aufgebaut mit einer sich selbst reinigenden, hydrodynamisch sehr glatten, nanostrukturierten Oberfläche in Form einer porenbildenden Komponente mit definierter Porengröße, die ich nach der Partikelgröße von klebrigen Schmutzpartikeln richtet, und einer porenfüllenden Komponente, die gelbildende ode hydrophobe, den Klebeeigenschaften der adhäsiven Biopolymere angepasste Eigenschaften aufweist.

EP 1 446 011 A1 beschreibt eine Antifouling-Komposition auf der Basis von 4-Bromo-2-(4-Chlorophenyl)-5-(Trifluoromethyl)-1 H-Pyrrole-3-Carbonitril.

EP 1 457 531 A1 beschreibt ebenfalls eine Antifouling-Komposition auf der Basis eines metallhaltigen Copolymers und dem Wirkstoff 4,5-dichloro-2-n-octyl-4-isothiazolin-3-one.

EP 65 10 34 A1 beschreibt eine fäulnisverhindernde Anstrichzusammensetzung, die ein Kupferoxid oder Kupferthiocyanat und ein Kupfersalz von 2-Pyridinthiol-1 als wirksame Verbindung enthält.

EP 64 66 30 beschreibt eine Beschichtungszusammensetzung, die als essentielle Komponenten ein oder mehrere Antifouling-Mittel und ein oder mehrere Copolymere enthält, das erhältlich ist aus einer Monomerenmischung, umfassend Monomer A der Formel (1)

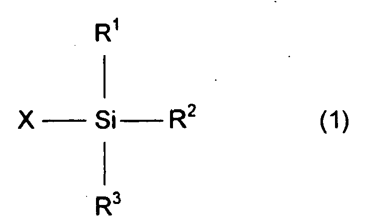

Worin R¹ und R³ jeweils eine Gruppe ist, ausgewählt aus Alkylgruppen, Cycloalkylgruppen und Arylgruppen, und die identisch oder voneinander verschieden sein können, und X ist eine Aryloyloxygruppe, eine Methacryloyloxylgruppe, eine Maleinoyloxylgruppe oder eine Fumaroyloxygruppe und ein Monomer B der Formel (2)

Y-(CH₂CH₂O)ₙ-R⁴ (2)

worin R⁴ eine Alkylgruppe, eine Cycloalkylgruppe oder Arylgruppe ist, Y eine Aryloyloxygruppe, eine Methacryloyloxylgruppe, eine Maleinoyloxylgruppe oder eine Fumaroyloxygruppe und n ist eine ganze Zahl von 1 bis 25, und die Menge des Antifoulingmittels beträgt 0,1 bis 80 Gew-% auf Basis des Gewichtes des Feststoffgehaltes der Beschichtungszusammensetzung.
Bei den Bioziden unterscheidet man zwischen "metallorganische Biozide", wie Arsen, Kupfer und Tributylzinn, und "natürliche Biozide", mit denen viele marine Organismen selbst ihre Oberfläche gegen Biofouling schützen. Sie können als biogene Wirkstoffe antibakteriell, antialgalen, antifungisch und makrofoulingverhindernd wirken. Jedoch wächst aufgrund strengerer Gesetzgebung der Bedarf an insgesamt nicht-toxischen Bewuchsschutzmethoden

Die antimikrobiellen Wirkstoffe, wie Chitosan, 2,4,4'Trichlor-2'-hydroxy-diphenylether und quartärer Ammoniumsalze verhindern effektiv die Besiedlung von Oberflächen des Trägermaterials durch Bakterien, Pilzen, Viren, Algen, Diatomeen, Muscheln und Krebsen in Luftumgebung, wässriger Umgebung und Luft-Wasser-Systemen, wirken somit antibakteriell, antimykotisch, fungizid, algizid und virozid.

Die Antifouling-Beschichtung ist wasser- und umweltneutral. Sie ist einfach in der Verarbeitung und kann durch Sprühen (Aerosol) oder Streichen auf die Flächen aufgetragen werden. Durch das Einlagern der Wirkstoffe in die SiO₂-Matrix können sie nicht gelöst oder ausgewaschen werden. Es ist ferner vorteilhaft, dass Ihre Wirksamkeit über die Zeit nicht abnimmt.

Weiterhin ist es von Vorteil, Metalloxide beispielsweise Al₂O₃ und/oder TiO₂ in die SiO₂ Matrix einzubringen. Diese erfindungsgemäße Antifouling-Beschichtung zeichnet sich damit durch eine starke hydrophobische und oleophobische Wirkung aus.

Eine mit der erfindungsgemäßen Antifouling-Beschichtung behandelte Oberfläche stellt für Polymere und/oder für Mikroorganismen eine sehr schlechte Haftungs-grundlage dar, so dass sich kaum Kolonien bilden können, biostatische Wirkstoffe sind antimikrobiell wirkende Substanzen, bei deren Berührung die Mikroorganismen ihr Wachstum einstellen. Darüber hinaus weist sie eine Dicke im Nanometerbereich auf und ist Säuren und Laugen gegenüber sehr beständig. Teflonhaltige und/oder fluorcarbonhaltige oder silikonhaltige Beschichtungen, die das Anheften von Mikroorganismen auf Grund ihrer glatten Oberfläche bewirken sollen, sind lediglich hydrophob, nicht jedoch oleophob, zum Teil sogar oleophil, so dass sich Mikroorganismen auf den ölbenetzten Flächen durchaus ansiedeln und Biofoulingprozesse stattfinden können. Darüber hinaus sind diese Beschichtungen nicht abrasionsbeständig und unterliegen daher starkem Verschleiß. In der Verarbeitung sind diese Beschichtungen ebenfalls kritisch zu bewerten, da sie alkohol-basierte Lösungsmittel enthalten.

Metallorganische Beschichtungen, die Arsen, Kupfer, oder Tributylzinn enthalten, sind biozid, stark wasserverschmutzend und damit stark umweltbelastend. Ferner sind Tributylzinn-haltige Farben in den USA seit 01.06.2005 sogar verboten. Darüber hinaus sind diese nicht abrasionsbeständigen Beschichtungen erodierend und werden durch strömendes Wasser abgetragen. Die bioziden Wirkstoffe werden zunehmend in der Nahrungskette bis hin zum Menschen gefunden und sind damit in hohem Masse schädlich für die Menschen und die Umwelt.

Die nanoskalige Antifouling-Beschichtung auf SiO₂-Basis hingegen erfüllt die Forderung nach sowohl hydrophober als auch oleophober Wirkung. Mikroorganismen haften nur sehr schwer auf dieser Oberfläche und können so kaum Kolonien bilden. Durch die Komplexierung der polymerisierten SiO₂-Schicht mittels antibakterieller Chemikalien wird ein nicht eluierbares Antifouling erzeugt, das wasserneutral ist.

### Kartonagenbeschichtung

Weiter Gegenstand der Erfindung ist eine Beschichtung der vorgenannten Art in Form einer Verpackungsbeschichtung.

Eine weitere Aufgabe der Erfindung ist es, eine Beschichtung zur Verfügung zu stellen sowie Verfahren zum Schutz vor Feuchtigkeit von Verpackungen, wie Kartonagen auf Papier- und Pappbasis, wie auch auf Basis von Textilien und Geweben unterschiedlichster Art, vor Regen, Schnee, Kondenswasser, Seewasser, extrem hohe relative Luftfeuchte und Mikroorganismen, bei gleichzeitiger Beibehaltung der Atmungsaktivität (Diffusionsfähigkeit) auf der Basis von ultradünnen SiO₂-Beschichtungen und gleichzeitigem antimikrobiellem Schutz, sowie ein Verfahren hierzu.

Verpackungen, wie Kartonagen dienen als wasserdichte Verpackung von Gütern und Waren aller Art, um einen möglichst sicheren Transport des Transportgutes zu gewährleisten, d.h. man strebt an eine Antifouling-Beschichtung zu erreichen.

Hierbei soll die Verpackung nicht nur den Inhalt vor Beschädigungen mechanischer Art schützen, sondern die Verpackung soll das Transportgut auch vor Beeinträchtigung durch Wasser oder Feuchtigkeit schützen. Dabei sind die Transportgüter Feuchtigkeit unterschiedlichster Art, wie z.B. Regen, Schnee, Kondenswasser, Seewasser, extrem hoher relativer Luftfeuchte oder feuchten Stapelunterlagen, ausgesetzt. Feuchte- oder nässegeschädigte Kartonagen erleiden Wertminderungen z.B. durch lineare Deformierungen, Verdrehungserscheinungen, Veränderungen in Glattheit und Farbe, Verminderung der mechanischen Reißfestigkeit und Welligwerden. Bei der Lagerung im Stapel führt ein Feuchtigkeitsüberschuss zum Aufquellen der Fasern in den Randpartien die hierdurch unter anderem in ihren Rändern wellig können. Diese Schäden sind irreversibel, da es bei der späteren Trocknung zum Verziehen infolge innerer Spannungen bei ungleichmäßiger Verteilung der Feuchtigkeit innerhalb des Bogens und zur Fleckenbildung (Trocknungsränder) kommt. Ladungsschweiß kann besonders bei Fahrten von kalt nach warm bzw. beim Löschen in tropischen Häfen entstehen, wenn die Ware während der Reise nicht genügend erwärmt wurde und z.B. beim Öffnen der Lukendeckel bzw. Containertüren der warmen Umgebungsluft ausgesetzt wird. Eine gewisse Atmungsaktivität ist bei einigen Verpackungen durchaus erwünscht, wenn z.B. Produkte verpackt werden, die nach dem Verpacken noch Feuchtigkeit abgeben. Im Bereich der Pharma- und Medizintechnikindustrie werden einige Produkte z.B. warm und feucht verpackt. Es besteht also der Bedarf an Verpackungen, die in der Lage sind, Feuchtigkeit von innen nach außen abzugeben, gleichzeitig jedoch von außen nach innen wasserdicht sind.

Es ist bekannt, Verpackungen, also Kartonagen auf der Außenseite mit Polyäthylen-Beschichtungen (PE) zu versehen, um das Eindringen von Wasser in Form von Regen, Schnee, Kondenswasser, Seewasser, extrem hohe relative Luftfeuchte oder feuchte Stapelunterlagen in die Verpackung zu verhindern. Gleichzeitig jedoch verhindert die Polyäthylen-Beschichtung die Diffusion von Feuchtigkeit, z. B. dass Restfeuchte des zu verpackenden Produktes, von innen nach außen gelangt. Die von außen aufgebrachte Polyäthylen-Beschichtung wirkt an dieser Stelle wie eine Dampfsperre, die Feuchtigkeit in und an der Kartonage kondensiert. Durch die Feuchtigkeitsaufnahme von innen wird die Stabilität des Kartons, insbesondere in den ersten 3-5 Tagen, erheblich beeinträchtigt. Während dieser Zeit ist die Häufigkeit der so genannten TUL-Prozesse (Transport, Umschlag, Lagerung) am höchsten. Schäden am Karton sind dadurch vorprogrammiert, was immense Kosten zur Schadensbehebung zur Folge hat.

Kondensierte Wassermoleküle sind ca. 700-mal größer als dampfförmige Wassermoleküle, d.h., Wasserdampf ist in der Lage durch die Beschichtung zu diffundieren. Kondensierte Moleküle sind wesentlich größer und werden somit an der Oberfläche zurückgehalten. Die Beschichtung ist auf Grund der polymerisierten SiO₂-Matrix glasartig und vorteilhafterweise dadurch sehr abrasionsbeständig, säuren- und laugenbeständig sowie kratzfest.

Aufgabe der Erfindung ist es, eine neuartige Verpackungsbeschichtung zu schaffen, die die Nachteile der Polyethylen-Beschichtung (Dampfsperre) verhindert, gleichzeitig wasserundurchlässige und atmungsaktive Eigenschaften aufweist, hydrophob und gleichzeitig oleophob und antimikrobiell ist und so kostengünstig die Anzahl der Schäden reduziert und dafür sorgt, dass Verpackungen sogar mehrfach verwendet werden können.

Diese Aufgabe wird gelöst durch die Verwendung der Beschichtungszusammensetzung der vorbeschriebenen Art auf / in Verpackungen, wie Kartonagen auf Papier- und Pappbasis, wie auch auf Basis von Textilien und Geweben und Gewirken.

### Beschichtung für Aquarien / Terrarien

Weiterer Gegenstand der Erfindung ist eine Beschichtung der vorgenannten Art von Aquarien oder Terrarien, insbesondere von Seewasser- oder Süßwasseraquarien.

### Beschichtung von organischen Materialien

Weiter Gegenstand der Erfindung ist eine Beschichtung, bei der das Trägermaterial aus den organischen Materialien, insbesondere Wolle, Baumwolle (Cellulose), Textilien, Papier, Pappe, Naturschwamm, Kunstschwamm, Leder, Holz, Karton und Kunststoffen besteht.

Als Substrat können Oberflächen verwendet werden, die aus Kunststoff, Holz, Leder, textilen Geweben, Filzen, Vliesstoffen, Non-wovens und Gewirken bestehen. Durch die duktilen Eigenschaften der Beschichtungen lassen sich alle geometrischen Formen behandeln, dabei entsteht immer eine sehr glatte, homogene Oberfläche niedrigster Oberflächenspannung.

### Beschichtung von anorganischen Materialien

Weiterer Gegenstand der Erfindung ist eine Beschichtung der vorgenannten Art, bei der das Trägermaterial aus den anorganischen Materialien, insbesondere Metall, Glas, künstliches Gestein wie Beton, Ziegel, Fliesen, Fassaden, Putz besteht.

Weiterer Gegenstand der Erfindung ist eine Beschichtung der vorgenannten Art, bei der das Trägermaterial Kompositmaterialien wie glasfaser-verstärkter Kunststoff und/oder Metall-Kunststoff-Gewebe enthält.

### Beschichtung von Kunststoffen

Weiter Gegenstand der vorliegenen Erfindung ist eine Beschichtung der vorgenannten Art, bei der das Trägermaterial Kunstfasern, Filze und Gewebe, insbesondere aus Polyester, Polypropylen, Polyethylen hoher Dichte, Polyethylen niedriger Dichte, Polyacrylnitril, Polyamid, Polyimid, Polyaramid, Aramid, meta-Aramid, para-Aramid, Polytetrafluorethylen, Polyvinylidenfluorid, Polyphenylensulfid enthält

### Herstellung der Beschichtung

Der vorliegenden Erfindung liegt weiterhin die Aufgabe zugrunde, ein Verfahren zur Herstellung der vorbeschriebenen Beschichtung bereitzustellen

Die Erfindung betrifft so ein Verfahren zur Herstellung einer Beschichtung der vorbeschriebenen Art, wobei
➢ in einem ersten Verfahrensschritt die Bildung eines Solgels mit nanoskaligen Partikeln in an sich bekannter Weise durch Hydrolyse eines Prekursors in Wasser durchgeführt wird und
➢ in einem zweiten Verfahrensschritt die in einem hydrophilen Lösemittel gelösten / dispergierten antimikrobiellen Wirkstoffe der vorbeschrieben Art der Sole zugeführt werden.

Hier ist es bevorzugt, dass der Prekursor ausgewählt ist aus der Gruppe der Alkyltriethoxysilane und der Aminopropyltriethoxysilane, dem bis zu 20 Gew-% Al₂O₃, TiO₂, ZrO_{2,} MgO und / oder V₂O₅, bezogen auf den Gesamtanteil an SiO_{2,} zugefügt worden sind und daß die Umsetzung innerhalb von 0,5 bis 72 h, bei Temperaturen von 5 °C bis 60 °C erfolgt.

Weiter ist es bevorzugt, dass das hydrophile Lösemittel ausgewählt ist aus Wasser und / oder linearen oder verzweigten Alkoholen mit bis zu 6 Kohlenstoffatomen, insbesondere wasserenthaltenden Alkoholen, insbesondere Ethanol.

### Aufbringung der Beschichtung

Der Erfindung liegt weiter die Aufgabe zugrunde, ein Verfahren zur Aufbringung der Beschichtung bereitzustellen.

Die Erfindung betrifft daher weiterhin ein Verfahren zur Aufbringung der Beschichtungszusammensetzung, auf Trägermaterialien der vorbeschrieben Art durch Kontaktieren der Oberfläche, insbesondere Sprühen, Tauchen, Schleudern, Streichen, Begießen, Foulardierung, Filmbegießen und Sprühbalken mit wenigstens einer Sprühdüse. Die Beschichtung bzw. Oberflächenveredelung kann durch übliche Verfahren wie Sprühen (spray coating), Tauchen (dip coating), Schleudern (spin coating) Streichen, Begießen erfolgen. Ebenfalls möglich und erprobt sind industrielle Beschichtungsverfahren wie Foulardierung, Filmbegießmaschinen, Sprühbalken mit einer oder mehrerer Sprühdüsen.

Die vorliegende Erfindung betrifft schließlich verschiedene Verwendungsarten der Applikation der Beschichtungszusammensetzung.

### Anti-fouling

Zunächst kann die erfindungsgemäße Beschichtungszusammensetzung der vorgenannten Art als Antifouling-Mittel für mit Wasser, insbesondere mit Meer- und Seewasser in Verbindung stehenden Oberflächen eingesetzt werden.

### Kartonagenbeschichtung

Weiter kann die erfindungsgemäße Beschichtungszusammensetzung der vorgenannten Art auf / in Verpackungen, wie Kartonagen auf Papier- und Pappbasis, wie auch auf Basis von Textilien und Geweben und Gewirken verwendet werden.

### Korrosionsschutz für technische Geräte und Behälter

Die vorliegende Erfindung betrifft weiterhin die Verwendung der vorgenannten Beschichtungszusammensetzung als Korrosionsschutz von technischen Geräten oder Behältern, insbesondere Wärmetauschern, Verdampfungskühlern, Kesselrohren, Heizflächen, Sprühadsorbern, Sprühtrocknern, Kühlaggregaten, Schornsteinen aus Metall, Katalysatoren, Turbinen, Ventilatoren, Reaktoren, Silos für Lebensmittel, Zementsilos, Kalksilos, Kohlesilos.

### Korrosionsschutz für Glasoberflächen

Die vorliegende Erfindung betrifft weiterhin die Verwendung der vorgenanten Beschichtungszusammensetzung als Korrosionsschutz vor Glaskorrosion von Glasoberflächen, insbesondere Fenstern, Glastüren, Bauelementen und Fassadenelementen aus Glas.

### Antimikrobielle Schutzschicht

Die vorliegende Erfindung betrifft weiterhin die Verwendung der Beschichtungszusammensetzung als antimikrobielle Schutzschicht von Kühlschränken, Kühltruhen und Kühlräumen, insbesondere in gewerblichen Fleischzerlegungs- und verarbeitungsbetrieben.

Die vorliegende Erfindung betrifft weiterhin die Verwendung der Beschichtungszusammensetzung als antimikrobielle Schutzschicht von Oberflächen in gewerblich oder privat genutzten Räumen, insbesondere Krankenhäusern, Seniorenwohn-heimen, Fleischzerlegungsbetrieben, Lebensmittelproduktionsanlagen, Großküchen, und in Fahrzeugen, insbesondere Flugzeugen, Personenbussen, Schiffen, Zügen und Straßenbahnen.

Die vorliegende Erfindung betrifft weiterhin die Verwendung der Beschichtungszusammensetzung als antimikrobielle Schutzschicht von Produktionsmaschinen in der Lebensmittelindustrie.

Die vorgenannten Räume und Fahrzeuge sind aufgrund der Vielzahl der Benutzer und der Art der verarbeiteten aufbewahrten Lebensmittel stets sehr anfällig für ein vermehrtes Vorkommen von Mikroorganismen, die sich sonst auf den Oberflächen der Räume niederlassen. Dies kann durch die o.g. Beschichtung(zusammenset-zung) vermindert / vermieden werden.

### Dehnbarkeit der Beschichtung

Die erfindungsgemäße Zusammensetzung zeichnet sich schließlich dadurch aus, dass sie eine Dehnbarkeit gegenüber der Ursprungsgröße von bis zu 250 % aufweist.

Die vorliegende Erfindung wird nachfolgend zunächst durch Ausführungsbeispiele in Form von Herstellbeispielen und Anwendungsbeispielen näher erläutert.

### Ausführungsbeispiel 1 "Textiles Substrat":

### 1. Herstellung eines wässerigen bioziden SiO₂ - Solgels

Es werden 100 ml Tetraethoxysilan, 400 ml Wasser und 200 ml 0,01 N Salzsäure bei Umgebungstemperatur (20° C) gemischt und kontinuierlich gerührt (ca. 5 Stunden). Dabei entsteht ein wässriges SiO₂ - Solgel, mit einem Feststoffanteil von ca. 4,5 % SiO₂ mit einer mittleren Partikelgröße von 6 nm. In einem zweiten Schritt werden 100 ml dieses Solgels mit 100 ml einer 2 %igen Lösung der Biozid-Kombination (Mischungsverhältnis 50 % Chitosan 2s, 25 % Triclosan und 25 % Cetyltrimethylammoniumbromid) in 5 % Essigsäure gemischt und verrührt. Das so entstandene Solgel kann mittels verschiedener Varianten auf textile Substrate appliziert werden.

### 2. Herstellung der bioziden SiO₂ - Beschichtung auf einem textilen Substrat

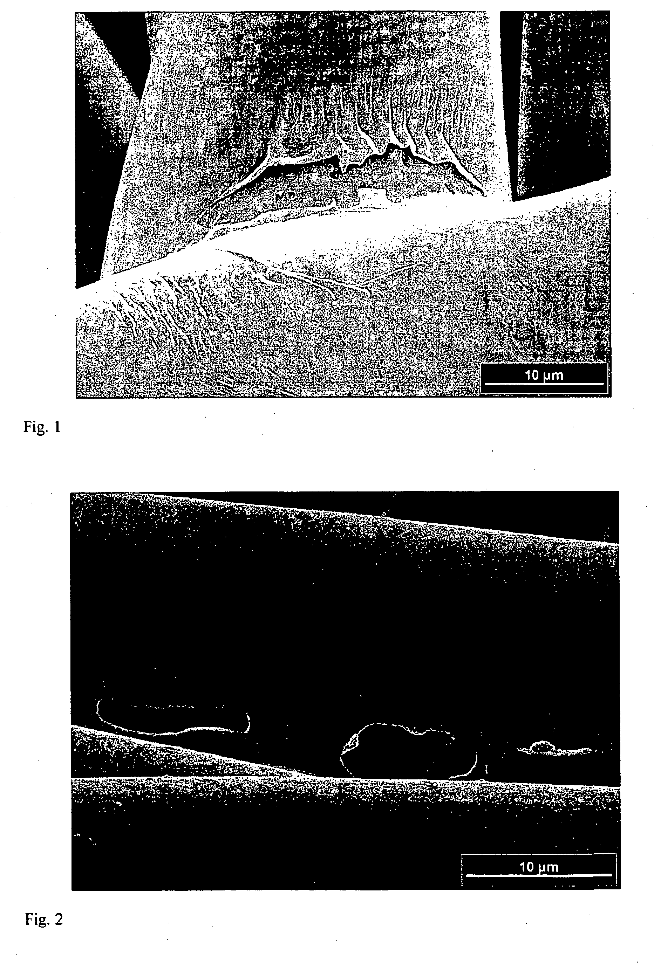

Ein Polyphenylensulfidfilz in DIN A4-Format wurde durch Tauchen in der unter 1 beschriebenen Lösung beschichtet. Anschließend wurde das Substrat bei Umgebungstemperatur 24 Stunden getrocknet, nach Abschluss der Trocknungsphase entstand die Beschichtung von ca. 150 nm Schichtdicke auf den Fasern (siehe Figur 2). Dabei wurde die Sole vollständig in ein Gel umgesetzt, welches die einzelnen Fasern der Filzstruktur komplett umhüllte.

### 3. Antimikrobielle Überprüfung des Filzmusters

Die Bestimmung der bioziden Wirkung wurde in Anlehnung an EN 1040 durch das Institut Fresenius durchgeführt. Dabei wurden die Testorganismen Staphylococcus aureus (ATCC 6538) und Pseudomonas aeruginosa (ATCC 15442) verwendet. Mit Hilfe des Verdünnungs-Neutralistions- und Membranfiltrations-Verfahrens konnte gezeigt werden, dass auf der Beschichtungsoberfläche eine Bakterienreduktion um Faktor 10⁵ nach einer Expositionszeit von 60 Minuten zu verzeichnen war.

### Ausführungsbeispiel 2 "Substrat aus Kunststoff":

### 1. Herstellung eines wässerigen bioziden SiO₂ - Solgels

Es werden 100 ml Tetraethoxysilan, 400 ml Ethanol und 200 ml 0,01 N Salzsäure bei Umgebungstemperatur (20° C) gemischt und kontinuierlich gerührt (ca. 5 Stunden). Dabei entsteht ein flüssiges SiO₂ - Solgel, mit einem Feststoffanteil von ca. 4,5 % SiO₂ mit einer mittleren Partikelgröße von 6 nm. In einem zweiten Schritt werden 100 ml dieses Solgels mit 100 ml einer 2 %igen Lösung Triclosan in 5 % Essigsäure gemischt und verrührt. Das so entstandene Solgel kann mittels verschiedener Varianten auf Substrate aus Kunststoff appliziert werden.

### 2. Herstellung der bioziden SiO₂ - Beschichtung auf einem Kunststoff-Substrat

Eine Kunststoff-Platte aus PVC in der Abmessung von 30 cm x 30 cm wurde durch Sprühen mit der unter 1 beschriebenen Lösung beschichtet. Anschließend wurde das Substrat bei Umgebungstemperatur 24 Stunden getrocknet, nach Abschluss der Trocknungsphase entstand die Beschichtung von ca. 150 nm Schichtdicke auf der Kunststoff-Platte. Dabei wurde die Oberfläche der Platte vollständig beschichtet.

### 3. Antimikrobielle Überprüfung der Kunststoffplatte

Die Bestimmung der bioziden Wirkung wurde in Anlehnung an EN 1040 durch das Institut Fresenius durchgeführt. Es wurden die Bakterien "Corynebacterium minutissiimum (gram-positiv), Propionibacterium acnes (gram-positiv), Staphylococcus aureus (gram-positiv), Staphylococcus epidermitis (gram-positiv), Strepptococcus mutans (gram-positiv), Escherichia coli (gram-negativ) und Pseudomonas aeruginosa (gram-negativ) verwendet. Mit Hilfe des Verdünnungs-Neutralistions- und Membranfiltrations-Verfahrens konnte gezeigt werden, dass auf der Beschichtungsoberfläche eine Bakterienreduktion um Faktor 10⁵ nach einer Expositionszeit von 60 Minuten zu verzeichnen war.

### Ausführungsbeispiel 3 "Vergleichstest"

Es wurden 8 Kunststoffplatten nach Ausführungsbeispiel 2 für einen Vergleichstest präpariert. In einem ersten Schritt wurden die Platten mit einem stark kationischen Tensid gereinigt, anschließend mit einer Isopropanol-Lösung in einem zweiten Schritt feingereinigt. Die Platten 1 bis 8 wurden wie folgt beschichtet:

| | |
|---|---|
| Platte 1 | unbeschichtet (0-Probe) |
| Platte 2 | SiO₂-Beschichtung mit Chitosan+Triclosan (2 %ig) |
| Platte 3 | SiO₂-Beschichtung mit Chitosan+Triclosan (5 %ig) |
| Platte 4 | SiO₂-Beschichtung mit Chitosan+Quats (2 %ig) |
| Platte 5 | SiO₂-Beschichtung mit Chitosan+Quats (5 %ig) |
| Platte 6 | SiO₂-Beschichtung mit Triclosan+Quats (2 %ig) |
| Platte 7 | SiO₂-Beschichtung mit Triclosan+Quats (5 %ig) |
| Platte 8 | SiO₂-Beschichtung mit Chitosan+Triclosan+Quats (2 %ig) |
| Platte 8 | SiO₂-Beschichtung mit Chitosan+Triclosan+Quats (5 %ig) |

Zur Prüfung der antibakteriellen Wirkung der unterschiedlichen Beschichtungen gegen Bakterien wurde der Leuchtbakterientest nach Dr. Lange (DIN 38 412 L 34/341), der als Test auf die Toxizität von Abwässern eingesetzt wird, angewandt. Als Prüfbakterium wurden Leuchtbakterien der Art "Vibrio fischeri" (NRRL-B-11117, gram-negativ) verwendet. Dieser Test beruht auf der Fähigkeit von bestimmten marinen Bakterien (v.a.Meeresbakterien) zu leuchten. Dieses Leuchten, das aufgrund enzymatischer, energiestoffwechsel-abhängiger Prozesse (Luciferin-Luciferase-System) abläuft. Kommen diese Lebewesen jedoch in ein toxisches Medium, so wird ihre Leuchtkraft gehemmt. Die Toxizität von Einzelsubstanzen, Stoffgemischen oder Eluaten wird photometrisch als Leuchthemmung ermittelt. Aus dem Grad der Hemmung des Leuchtens kann man Rückschlüsse auf den Grad der Wachstumshemmung ziehen.

In einem ersten Schritt werden die konservierten Leuchtbakterien vom Typ NRRL-B-11177 in einer Nährlösung reaktiviert und das Ausgangsleuchten photometrisch gemessen und somit die Nullprobe definiert. Danach wird die Leuchtbakterienlösung auf das zu untersuchende Substrat mittels einer Pipette aufgetragen. Nach jeweils 20, 40, 60, 80, 100, 120 und 140 Minuten wird die Leuchtkraft photometrisch gemessen und mit dem Ausgangswert der Nullprobe verglichen. Die Abnahme der Leuchtkraft wird als %-Wert "Wachstumshemmung bezogen auf die Nullprobe" über die Zeit aufgetragen.
Eingesetzt wurde der Dr. Lange LUMIStox-Meßplatz, bestehend aus dem LUMIStox-Messgerät, dem LUMIStherm-Temperiergerät und dem Thermodrucker LD 100 vgl. z.B.
http://www.rz.fh-ulm.de/labore/chemie/AUSSTATTUNG/BIOLUM/Biolum.htm

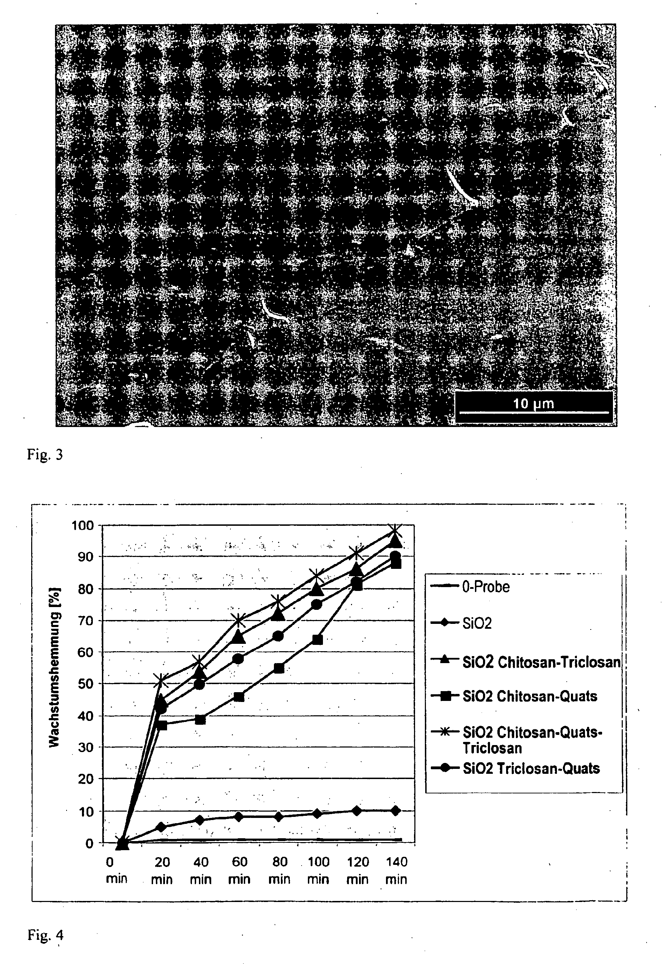

Figur 4 zeigt die Wachstumshemmung der verschiedenen Beschichtung in % gemessen über die Zeit.

Die Langzeitwirkung hinsichtlich antimikrobieller Wirkung konnte erfolgreich nachgewiesen werden. Auch nach mehr als 12 Monaten konnten signifikante Wachstumsbeschränkungen von über 90 % gezeigt werden.

### Ausführungsbeispiel 4 "Schiffsrumpf"

Es wurden 4 Platten von je 30 x 30 cm, die aus einem gebrauchten Yachtrumpf geschnitten worden, von den vorhandenen Antifouling-Anstrichen durch Sandstrahlen befreit. Die Anstriche wurden bis zur Freilegung der Gelcoat-Schicht entfernt. Anschließend wurde die Gelcoat-Schicht mit Füller verspachtelt und geschliffen. Danach wurden die Platten mit einem Vinyl-Primer behandelt und mit einer handelsüblichen Bootsrumpffarbe (Fabrikat: Jotun Hardtop 2K) zweifach gestrichen. Es handelte sich um eine 2-Komponentenfarbe auf Polyurethanbasis. Nach dem Trocknen der Farbe wurde unterschiedliche Beschichtungen nach Ausführungsbeispiel 2 aufgetragen. Dabei wurden folgende Biozid-Kombinationen aufgetragen.

| | |
|---|---|
| Platte 1 | SiO₂-Beschichtung mit Chitosan+Triclosan (2 %ig) |
| Platte 2 | SiO₂-Beschichtung mit Chitosan+Quats (2 %ig) |
| Platte 3 | SiO₂-Beschichtung mit Triclosan+Quats (2 %ig) |
| Platte 4 | SiO₂-Beschichtung mit Chitosan+Triclosan+ Quats (2 %ig) |

Zur Prüfung der antimikrobiellen Wirkung wurde abermals der unter Ausführungsbeispiel 3 beschriebene Leuchtbakterientest durchgeführt. Es konnten nahezu identische Ergebnisse, wie in Figur 4 abgebildet, beobachtet werden.

### Ausführungsbeispiel 5 "Kartonnagen"

Es wurden 8 Kartonplatten von je 30 x 30 cm, hergestellt aus einem handelsüblichen Kartonagematerial mit einem Flächengewicht von ca. 400 g/m², nach Ausführungsbeispiel 1 mit unterschiedlichen Biozid-Beschichtungen ausgerüstet.

| | |
|---|---|
| Platte 1 | unbeschichtet (0-Probe) |
| Platte 2 | SiO₂-Beschichtung mit Chitosan+Triclosan (2 %ig) |
| Platte 3 | SiO₂-Beschichtung mit Chitosan+Triclosan (5 %ig) |
| Platte 4 | SiO₂-Beschichtung mit Chitosan+Quats (2 %ig) |
| Platte 5 | SiO₂-Beschichtung mit Chitosan+Quats (5 %ig) |
| Platte 6 | SiO₂-Beschichtung mit Triclosan+Quats (2 %ig) |
| Platte 7 | SiO₂-Beschichtung mit Triclosan+Quats (5 %ig) |
| Platte 8 | SiO₂-Beschichtung mit Chitosan+Triclosan+Quats (2 %ig) |
| Platte 8 | SiO₂-Beschichtung mit Chitosan+Triclosan+Quats (5 %ig) |

Anschließend wurden die Kartonplatten einem antibakteriellem Test unterzogen. Auch hier wurde wieder der Leuchtbakterientest nach Dr. Lange zur Anwendung gebracht. Es überraschte nicht, dass auch bei diesem Test nahezu identische Resultate zu verzeichnen waren, wie unter Figur 4 abgebildet. Da sich die biologischen Prozesse auf der bioziden Beschichtung abspielen, hat die Beschaffenheit des Substrates keinerlei Einfluss auf die antibakterielle Wirkung.

### Ausführungsbeispiel 6 Dehnbarkeit

Wie in Ausführungsbeispiel beschrieben, wurde eine Polyamidfaser mit ca. 0,80 mm Durchmesser mit der erfindungsgemäßen Beschichtung aber auch mit einer wirkstofffreien Beschichtung versehen und anschließend gebogen. Dabei ist deutlich erkennbar, dass in Beiden Fällen am Außenradius der Faser keine Risse auftreten und am Innenradius der Faser nur geringfügige Stauchungen entstehen. Die Polymerstruktur der SiO₂-Beschichtung hier beispielhaft für die Faser gezeigt, führt zu Eigenschaften, die von kristallinen SiO₂-Strukturen nicht bekannt sind, nämlich Duktilität, Elastizität und Dehnbarkeit. Abhängig von der Elastizität des Substrates sind Dehnbarkeiten von bis zu 250 % erreichbar.

Die vorliegende Erfindung wird weiter durch Figuren näher erläutert.

Es zeigen:
- Fig. 1:: Eine REM-Aufnahme der Beschichtung gemäß Herstellbeispiel 1 auf einer PPS-Faser (1500x Vergrößerung)
- Fig. 2:: eine REM-Aufnahme der vorgenannten Beschichtung auf einer PES-Faser (1500x Vergrößerung)
- Fig. 3:: eine REM-Aufnahme der vorgenannten Beschichtung auf einem Metallsubstrat.
- Fig. 4:: zeigt die antibakterielle Wirkung verschiedener Beschichtungen über die Zeit.
- Fig. 5:: zeigt das Dehnvermögen der vorgenannten Beschichtung auf einer PA Faser.

Fig. 1 zeigt die sehr glatte Oberfläche der Beschichtung, die an keiner Stelle Porosität zeigt. Die in der Faser befindlichen Poren werden durch die Beschichtung abgedeckt.

Fig. 2 zeigt ebenfalls die sehr glatte Oberflächenstruktur der Beschichtung, sowie das vollständige Umhüllen der runden Faser. Erst die glatte Oberfläche in Verbindung mit einer sehr niedrigen Oberflächenspannung schafft die hydrophoben und oleophoben Eigenschaften, die dazu beitragen, dass die Erstbesiedlung von Mikroorganismen erschwert wird. Es sind zahlreiche Mikroorganismen bekannt, die vor der Besiedlung des Substrates durch die Abgabe eines klebrigen Sekrets quasi testen, ob die Fläche für eine Besiedlung geeignet ist. Da dieses Sekret auf der oleophoben Fläche kaum haften bleibt, kommt es in vielen Fällen erst gar nicht zu einer Besiedlung und in Folge zu einer Koloniebildung.

Fig. 3 zeigt die Beschichtung auf einem Metallsubstrat aus. Es ist klar erkennbar, dass die homogene Schicht keinerlei Poren aufweist, sondern eine geschlossene, dichte Oberfläche zeigt.

Fig. 4 zeigt im Vergleich die antibakterielle Wirkung der erfindungsgemäßen Beschichtungen auf harten Oberflächen, hier einer PVC Platte gegenüber einer unbeschichteten oder einer nur mit Siliziumdioxidbeschichteten Platte über einen Zeitraum von bis zu 140 Minuten bei Umgebungstemperatur, d.h. ca. 20 °C. Die unbeschichtete Platte zeigte im Rahmen der Meßungenauigkeit keine Wachstumshemmung und die nur mit Siliziumdioxidbeschichte Platte erreichte nach 60 min. eine Wachstumshemmung von 20 % und nach 140 min von 40%

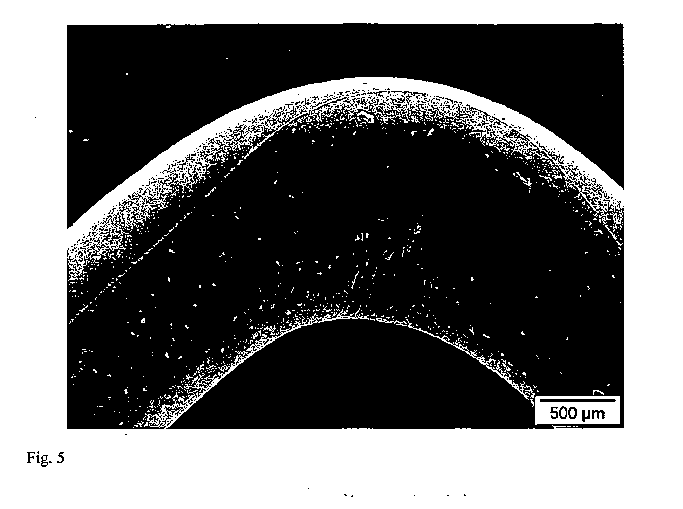

Fig. 5 zeigt eine Polyamidfaser mit ca. 0,80 mm Durchmesser die mit der erfindungsgemäßen Beschichtung versehen worden ist und anschließend gebogen wird. Dabei ist deutlich erkennbar, dass am Außenradius der Faser keine Risse auftreten und am Innenradius der Faser nur geringfügige Stauchungen entstehen.

## Patentansprüche

1. Antibakterielle Beschichtungszusammensetzung, enthaltend 50 Gew-% bis 99,9 Gew.-%, vorzugsweise 80 Gew. %-% bis 99 Gew-%, eines SiO₂-erzeugenden Mittels, wobei die Beschichtungszusammensetzung 0,1 Gew-% bis 50 Gew-%, vorzugsweise 1 Gew-% bis 20 Gew-%, bezogen auf die Gesamtzusammensetzung, antibakterielle Wirkstoffe enthält, **dadurch gekennzeichnet, dass** die antibakteriellen Wirkstoffe ausgewählt sind aus wenigstens 2 Verbindungen der nachstehenden Verbindungsklassen in Form von kationischen, anionischen oder nichtionischen deacetylierten Chitosanen und Chitosanderivaten und/oder Phenolen der Gruppe der halogenierten Dihydroxydiphenylmethane, -sulfide, und -ether und/oder substituierten quartären Ammoniumsalze der alkylierten Phosporsäure.

2. Zusammensetzung nach Anspruch 1, **dadurch gekennzeichnet, dass** das SiO₂-erzeugende Mittel ausgewählt ist aus
➢ 0 bis 100 Gew-%, vorzugsweise 1 bis 99 Gew-% Tetraethoxysilan,
➢ 0 bis 100 Gew-%, vorzugsweise 1 bis 99 Gew-% Trimethoxymethylsilan und
➢ 0 bis 100 Gew-%, vorzugsweise 1 bis 99 Gew-% Dimethoxydimethylsilan.

3. Zusammensetzung nach Anspruch 1 oder 3, **dadurch gekennzeichnet, dass** das SiO₂ erzeugende Mittel weiterhin bis zu 20 Gew-% Al₂O₃, TiO₂, ZrO₂, MgO und /oder V₂O₅ enthält, wobei diese Zusatzstoffe in beliebigen Mischungsverhältnissen zugegen sind, vorzugsweise in Mischungsverhältnissen zwischen 0,1 Gew-% und 50 % Gew-% aus der Gruppe der Al₂O₃, TiO₂, ZrO₂, MgO und V₂O₅, besonders bevorzugt in Mischungsverhältnissen zwischen 1 Gew-% und 20 Gew-% aus der Gruppe der Al₂O₃, TiO₂ und ZrO₂.

4. Zusammensetzung nach Anspruch 1, **dadurch gekennzeichnet, dass** das halogenierte Dihydroxydiphenylmethan, -sulfid und -ether ausgewählt ist aus 5,5'-Dichlor-2,2'-dihydroxy-diphenylmethan, 3,5,3',5'-Tetrachlor-4,4'-dihydroxy-diphenylmethan, 3,5,6,3',5',6'-Hexchlor-2,2'-dihydroxydiphenylmethan, 5,5'-Dichlor-2,2'-dihydroxy-diphenylsulfid, 2,4,5,2',4',5' Hexachlordihydroxydiphenylsulfid, 3,5,3',5'-Tetrachlor-2,2'-Dihydroxy-diphenylsulfid, 4,4'-Dihydroxy-2,2'dimethyl-diphenylmethan, 2'2-Dihydroxy-5',5-diphenylether oder 2,4,4'Trichlor-2'-hydroxy-diphenylether.

5. Zusammensetzung nach Anspruch 1 oder 4, **dadurch gekennzeichnet, dass** es sich bei dem Phenol um 2,4,4'Trichlor-2'-hydroxy-diphenylether handelt.

6. Zusammensetzung nach Anspruch 1, **dadurch gekennzeichnet, dass** es sich um kationischen, anionischen oder nichtionischen deacetylierten Chitosane und Chitosanderivate handelt, vorzugsweise um Trimethylchitosaniumchlorid, das Dimethyl-*N*-_{*C*2*. bis C*12}-alkylchitosaniumiodid, quartäre Chitosansalze mit Anionen der Phosphorsäure, O-Carboxymethylchitin-Natriumsalze, *O-*Acylchitosan, *N*,*O*-Acylchitosan, *N*-3-Trimethylammonium-2-hydroxypropylchitosan und *O*-TEAE-Chitiniodid.

7. Zusammensetzung nach irgendeinem der Ansprüche 1 oder 6, **dadurch gekennzeichnet, dass** die Chitosane und Chitosanderivate niedermolekulare Chitosane und Chitosanderivate sind, wobei die Molekulargewichte zwischen 1,0 x 10⁵ g/mol und 3,5 x 10⁸ g/mol, vorzugsweise zwischen 2,5 x 10⁵ g/mol und 9,5 x 10⁵ g/mol liegen.

8. Zusammensetzung nach Anspruch 1, **dadurch gekennzeichnet, dass** es sich um quartäre Ammoniumsalze der alkylierten Phosphorsäure handelt, wobei jeder der Alkylreste, unabhängig voneinander 1 bis 12 Kohlenstoffatome aufweist und / oder halogenierte Ammoniumsalze, vorzugsweise das Cetyltrimethylammoniumbromid,
das Didecyldimethylammoniumchlorid, das Hexadecylpyridiniumchlorid und das Polyoxyalkyltrialkylammoniumchlorid.

9. Zusammensetzung nach irgendeinem der Ansprüche 1 oder 4 bis 8, **dadurch gekennzeichnet, dass** die mikrobiellen Wirkstoffe in Mischungsverhältnissen zwischen 0,1 Gew-% bis 99,9 Gew-%, vorzugsweise 1 bis 99 Gew-%, insbesondere 5 bis 95 Gew-% vorliegen.

10. Zusammensetzung nach irgendeinem der Ansprüche 1 bis 9 weiterhin enthaltend übliche Hilfs- und Zusatzstoffe, insbesondere saure und basische Polykondensations-Katalysatoren und / oder Flouridionen.

11. Anwendungsset, enthaltend die Zusammensetzung gemäß Ansprüchen 1 bis 10 zusammen mit Applikationsmitteln zur Reinigung und Vorbereitung der zu beschichtenden Substrate, sowie in Form von individuell verpackten Sachet-Tüchern.

12. Nanoskalige, insbesondere 50 nm bis 500 nm, vorzugsweise zwischen 120 nm und 250 nm dicke antibakterielle. Beschichtung, enthaltend eine nicht poröse anorganische polymerisierte SiO₂-Schicht, aufgebracht auf ein Trägermaterial, wobei die Beschichtung 0,1 Gew-% bis 50 Gew-%, vorzugsweise 1 Gew-% bis 20 Gew-%, bezogen auf die Gesamtzusammensetzung, wenigstens eines antibakteriellen Wirkstoffs in Form von kationischen, anionischen oder nichtionischen deacetylierten Chitosanen und Chitosanderivaten und/oder Phenolen der Gruppe der halogenierten Dihydroxydiphenylmethane, -sulfide, und -ether und / oder substituierten quartären Ammoniumsalze der alkylierten Phosphorsäure enthält, **dadurch gekennzeichnet, dass** der antibakteriellen Wirkstoff ausgewählt ist aus wenigstens 2 Verbindungen der 3 nachstehenden Verbindungsklassen in Form von kationischen, anionischen oder nichtionischen deacetylierten Chitosanen und Chitosanderivaten und/oder Phenolen der Gruppe der halogenierten Dihydroxydiphenylmethane, -sulfide, und -ether und / oder substituierten quartären Ammoniumsalze der alkylierten Phosphorsäure.

13. Beschichtung nach Anspruch 11, **dadurch gekennzeichnet, dass** die SiO₂-Schicht wenigstens teilweise aus R-SiOₙ, und/oder R₂-SiOₙ besteht, wobei R = H, Alkyl, Aryl-, Epoxy-alkyl- oder Aminoalkyl- und n = 1,5 oder größer ist.

14. Beschichtung nach irgendeinem der Ansprüche 11 oder 12, **dadurch gekennzeichnet, dass** die SiO₂ Schicht Al₂O₃, TiO₂, ZrO₂, MgO und /oder V₂O₅ in beliebigen Mischungsverhältnissen enthält, vorzugsweise in Mischungsverhältnissen zwischen 0,1 Gew-% und 50 % Gew-% aus der Gruppe der Al₂O₃, TiO₂, ZrO₂, MgO und V₂O₅, besonders bevorzugt in Mischungs-verhältnissen zwischen 1 Gew-% und 20 Gew-% aus der Gruppe der Al₂O₃, TiO₂ und ZrO₂,

15. Beschichtung nach Ansprüchen 11 bis 13 als Beschichtung für harte Oberflächen, insbesondere als Antifouling-Mittel.

16. Beschichtung nach Anspruch 11 bis 13 als Beschichtung von Aquarien oder Terrarien, insbesondere von Seewasser- oder Süßwasseraquarien.

17. Beschichtung nach Ansprüchen 11 bis 13, **dadurch gekennzeichnet, dass** das Trägermaterial aus organischen Materialien, insbesondere Wolle, Baumwolle (Cellulose), Textilien, Papier, Pappe, Naturschwamm, Kunstschwamm, Leder, Holz, Karton und Kunststoffen besteht.

18. Beschichtung nach vorstehenden Ansprüchen 11 bis 13 in Form einer Verpackungsbeschichtung.

19. Beschichtung nach vorstehenden Ansprüchen 11 bis 13, **dadurch gekennzeichnet, dass** das Trägermaterial aus anorganischen Materialien, insbesondere Metall, Glas, künstliches Gestein wie Beton, Ziegel, Fliesen, Fassaden, Putz besteht.

20. Beschichtung nach Ansprüchen 11 bis 13, **dadurch gekennzeichnet, dass** das Trägermaterial Kompositmaterialien wie glasfaser-verstärkter Kunststoff und / oder Metall-Kunststoff-Gewebe enthält.

21. Beschichtung nach vorstehenden Ansprüchen 11 bis 13, **dadurch gekennzeichnet, dass** das Trägermaterial Kunstfasern, Microfasern, Filze und Gewebe, insbesondere aus Polyester, Polypropylen, Polyethylen hoher Dichte, Polyethylen niedriger Dichte, Polyacrylnitril, Polyamid, Polyimid, Polyaramid, Aramid, meta-Aramid, para-Aramid, Polytetrafluorethylen, Polyvinylidenfluorid, Polyphenylensulfid enthält.

22. Verfahren zur Herstellung einer Beschichtung nach Ansprüchen 11 bis 13, **dadurch gekennzeichnet, dass**
a. in einem ersten Verfahrensschritt die Bildung eines Solgels mit nanoskaligen Partikeln in an sich bekannter Weise durch Hydrolyse eines Prekursors in Wasser durchgeführt wird und
b. in einem zweiten Verfahrensschritt die in einem hydrophilen Lösemittel gelösten / dispergierten antimikrobiellen Wirkstoffe gemäß Ansprüchen 1 oder 4 bis 9 der Sole zugeführt werden.

23. Verfahren nach Anspruch 22, **dadurch gekennzeichnet, dass** der Prekursor ausgewählt ist aus der Gruppe der Alkyltriethoxysilane und der Aminopropyltriethoxysilane, dem bis zu 20 Gew-% Al₂O₃, TiO₂, ZrO₂, MgO und / oder V₂O₅, bezogen auf den Gesamtanteil an SiO₂, zugefügt worden sind und daß die Umsetzung innerhalb von 0,5 bis 72 h, bei Temperaturen von 5° C bis 60°C erfolgt.

24. Verfahren nach Anspruch 23, **dadurch gekennzeichnet, dass** das hydrophile Lösemittel ausgewählt ist aus Wasser und / oder linearen oder verzweigten Alkoholen mit bis zu 6 Kohlenstoffatomen, insbesondere wasserenthaltenden Alkoholen, insbesondere Ethanol.

25. Verfahren zur Aufbringung der Beschichtungszusammensetzung, erhalten nach irgendeinem der Ansprüche 1 bis 10, auf Trägermaterialien gemäß Ansprüchen 15 bis 21 durch Kontaktieren der Oberfläche, insbesondere Sprühen, Tauchen, Schleudern, Streichen, Begießen, Foulardierung, Filmbegießen und Sprühbalken mit wenigstens einer Sprühdüse.

26. Verwendung der Beschichtungszusammensetzung nach Ansprüchen 1 bis 10 als Antifouling-Mittel für mit Wasser, insbesondere mit Meer- und Seewasser in Verbindung stehenden Oberflächen.

27. Verwendung der Beschichtungszusammensetzung nach Ansprüchen 1 bis 10 auf / in Verpackungen, wie Kartonagen auf Papier- und Pappbasis, wie auch auf Basis von Textilien und Geweben und Gewirken.

28. Verwendung der Beschichtungszusammensetzung nach Ansprüchen 1 bis 10 als antimikrobielle Schutzschicht von Kühlschränken, Kühltruhen und Kühlräumen, insbesondere in gewerblichen Fleischzerlegungs- und verarbeitungsbetrieben.

29. Verwendung der Beschichtungszusammensetzung nach Ansprüchen 1 bis 10 als antimikrobielle Schutzschicht von Oberflächen in gewerblich oder privat genutzten Räumen, insbesondere Krankenhäusern, Seniorenwohnheimen, Fleischzerlegungsbetrieben, Lebensmittelproduktionsanlagen, Großküchen, und in Fahrzeugen, insbesondere Flugzeugen, Personenbussen, Schiffen, Zügen und Straßenbahnen.

30. Verwendung der Beschichtungszusammensetzung nach Ansprüchen 1 bis 10 als antimikrobielle Schutzschicht von Produktionsmaschinen in der Lebensmittelindustrie.

31. Beschichtung nach irgendeinem der Ansprüche 11 bis 14, **gekennzeichnet, durch** eine Dehnbarkeit gegenüber der Ursprungsgröße von bis zu 250 %.

## Claims

1. Antibacterial coating composition comprising 50 weight-% up to 99.9 weight-%, preferably 80 weight-% up to 99 weight-%, of an SiO₂-generating agent wherein the coating composition comprises 0.1 weight-% up to 50 weight-%, preferably 1 weight-% up to 20 weight-%, related to the total composition, of antibacterial agents, **characterized in that** the antibacterial agents are selected from at least 2 compounds of the following compound classes in the form of cationic, anionic or non-ionic deacetylated chitosans and chitosan derivatives and / or phenols of the group of halogenated dihydroxydiphenyl methanes, dihydroxydiphenyl sulphides, and dihydroxydiphenyl ethers and/or substituted quaternary ammonium salts of the alkylated phosphoric acid.

2. Composition according to claim 1, **characterized in that** the SiO₂-generating agent is selected from
- 0 up to 100 weight-%, preferably 1 up to 99 weight-%, tetraethoxysilane,
- 0 up to 100 weight-%, preferably 1 up to 99 weight-%, trimethoxymethylsilane, and
- 0 up to 100 weight-%, preferably 1 up to 99 weight-%, dimethoxydimethylsilane.

3. Composition according to claim 1 or 3, **characterized in that** the SiO₂₋ generating agent further comprises up to 20 weight-% Al₂O₃,TiO₂, ZrO₂, MgO and/or V₂O₅, wherein these additives are present at any mixing ratio, preferably in mixing ratios between 0.1 weight-% and 50 weight-% from the group of Al₂O₃, TiO₂, ZrO₂, MgO and V₂O₅. more preferably in mixing ratios between 1 weight-% and 20 weight-% from the group of Al₂O₃, TiO₂ and ZrO₂.

4. Composition according to claim 1, **characterized in that** the halogenated dihydroxydiphenyl methane, dihydroxydiphenyl sulphide and dihydroxydiphenyl ether is selected from 5,5'-dichloro-2,2'-diydroxydiphenyl methane, 3,5,3',5'-tetrachloro-4,4'-diydroxydiphenyl methane, 3,5,6,3',5',6'-hexachloro-2,2'-dihydroxydiphenyl methane, 5,5'-dichloro-2,2'-dihydroxydiphenyl sulphide, 2,4,5,2',4',5'-hexachiorodihydroxydiphenyl sulphide, 3,5,3',5'-tetrachloro-2,2'-dihydroxydiphenyl sulphide, 4,4'-dihydroxy-2,2'-dimethyldiphenyl methane, 2'2-dihydroxy-5',5-diphenyl ether or 2,4,4'-trichloro-2'-hydroxydiphenyl ether.

5. Composition according to claim 1 or 4, **characterized in that** the phenol is 2,4,4'-trichloro-2'-hydroxydiphenyl ether.

6. Composition according to claim 1, **characterized in that** the chitosans and chitosan derivatives are cationic, anionic or nonionic deacetylated chitosans and chitosan derivatives, preferably trimethylchitosanium chloride, the dimethyl-*N*-_{C2 to C12}-alkylchitosanium iodide, quaternary chitosan salts with anions of the phosphoric acid, *O*-carboxymethylchitin sodium salts, *O-*acylchitosan, *N*,*O*-acylchitosan, *N*-3-trimethylammonium-2-hydroxypropylchitosan and *O*-TEAE-chitin iodide.

7. Composition according to any of claims 1 or 6, **characterized in that** the chitosans and chitosan derivatives are low molecular chitosans and chitosan derivatives, wherein the molecular weights are situated between 1.0 x 10⁵ g/mol and 3.5 x 10⁶ g/mol, preferably between 2.5 x 10⁵ g/mol and 9.5 x 10⁵ g/mol.

8. Composition according to claim 1, **characterized in that** it concerns quaternary ammonium salts of the alkylated phosphoric acid, wherein each of the alkyl residues independently has 1 to 12 carbon atoms and/or halogenated ammonium salts, preferably the cetyltrimethylammonium bromide, the didecyldimethylammonium chloride, the hexadecylpyridinium chloride and the polyoxyalkyltrialkylammonium chloride.

9. Composition according to any of claims 1 or 4 to 8, **characterized in that** the microbial agents are present in mixing ratios between 0.1 weight-% up to 99.9 weight-%, preferably 1 weight-% up to 99 wight-%, more preferably 5 weight-% up to 95 weight-%.

10. Composition according to any of claims 1 to 9 further comprising usual additives and auxiliary materials, especially acidic and alkaline polycondensation catalysts and/or fluoride ions.

11. Application set, containing the composition according to claims 1 to 10 together with application agents for cleaning and preparing the substrates to be coated, as well as in form of individually packed sachet wipes.

12. Nanoscalic antibacterial coating, in particular having a thickness of 50 nm to 500 nm, preferably between 120 nm and 250 nm, comprising a non-porous inorganic polymerised SiO₂-layer applied onto a support material, wherein the coating comprises 0.1 weight-% up to 50 weight-%, preferably 1 weight-% up to 20 weight-%, related to the total composition, of at least one antibacterial agent in the form of cationic, anionic or non-ionic deacetylated chitosans and chitosan derivatives and/or phenols of the group of halogenated dihydroxydiphenyl methanes, dihydroxydiphenyl sulphides and dihydroxydiphenyl ethers and/or substituted quaternary ammonium salts of the alkylated phosphoric acid, **characterized in that** the antibacterial agent is selected from at least 2 compounds of the 3 following compound classes in form of cationic, anionic or non-ionic deacetylated chitosans and chitosan derivatives and/or phenols of the group of halogenated dihydroxydiphenyl methanes, dihydroxydiphenyl sulphides, and dihydroxydiphenyl ethers and/or substituted quaternary ammonium salts of the alkylated phosphoric acid.

13. Coating according to claim 11, **characterized in that** the SiO₂-layer at least partly consists of R-SiOₙ, and/or R₂-SiOₙ, wherein R is H, alkyl, aryl, epoxyalkyl or aminoalkyl and n is at least 1.5.

14. Coating according to any of claims 11 or 12, **characterized in that** the SiO₂ layer comprises Al₂O₃,TiO₂, ZrO₂, MgO and/or V₂O₅ in any mixing ratio, preferably in mixing ratios between 0.1 weight-% and 50 weight-% from the group of Al₂O₃,TiO₂, ZrO₂, MgO and V₂O₅, especially preferred in mixing ratios between 1 weight-% and 20 weight-% from the group of Al₂O₃, TiO₂ and ZrO₂.

15. Coating according to claims 11 to 13 as a coating for hard surfaces, especially as antifouling agent.

16. Coating according to claims 11 to 13 as a coating for aquaria or terrariums, especially for sea water or fresh water aquaria.

17. Coating according to claims 11 to 13, **characterized in that** the support material consists of organic materials, especially wool, cotton (cellulose), textiles, paper, cardboard, natural sponge, artificial sponge, leather, wood, carton and plastics.

18. Coating according to preceding claims 11 to 13 in the form of a packaging coating.

19. Coating according to preceding claims 11 to 13, **characterized in that** the support material consists of inorganic materials, especially metal, glass, artificial stone such as concrete, bricks, tiles, facades, plaster,

20. Coating according to claims 11 to 13, **characterized in that** the support material contains composite materials such as fibreglass-strengthened plastics and/or metal-plastic-fabrics.

21. Coating according to preceding claims 11 to 13, **characterized in that** the support material comprises synthetic fibres, microfibres, felts and fabrics, especially made of polyester, polypropylene, high-density polyethylene, low-density polyethylene, polyacrylonitrile, polyamide, polyimide, polyaramide, aramide, meta-aramide, para-aramide, polytetrafluoroethylene, polyvinylidene fluoride, polyphenylen sulphide.

22. Method for producing a coating according to claims 11 to 13, **characterized in that**
a. in a first process step the formation of a sol-gel with nano-scaled particles has been carried out in a per se known manner by a hydrolysis of a precursor in water and
b. in a second process step the antimicrobial agents dissolved / dispersed in a hydrophilic solvent are supplied to the brine according to claims 1 or 4 to 9.

23. Method according to claim 22, **characterized in that** the precursor is selected from the group of alkyltriethoxysilanes and aminopropyltriethoxysilanes to which 20 weight-% Al₂O₃, TiO₂, ZrO₂, MgO and/or V₂O₅ related to the total share of SiO₂, have been added, and **in that** the conversion follows within 0.5 to 72 hours at temperatures from 5°C up to 60°C.

24. Method according to claim 23, **characterized in that** the hydrophilic solvent is selected from water and/or linear or branched alcohols with up to 6 carbon atoms, in particular water-containing alcohols, especially ethanol.

25. Method for the application of the coating composition, obtained according to any of claims 1 to 10, onto the carrier materials according to claims 15 to 21 through contacting the surface, in particular by spraying, submerging, hurling, coating, dousing, foularding, casting and spray beaming with at least one spray nozzle.

26. Use of the coating composition according to claims 1 to 10 as antifouling agent for surfaces being in direct contact with water, especially sea and lake water.

27. Use of the coating composition according to claims 1 to 10 on / in packaging such as cartons on paper and cardboard basis as well as on the basis of textiles and fabrics and knitted fabrics.

28. Use of the coating composition according to claims 1 to 10 as antimicrobial protective layer of refrigerators, freezer cabinets and cold stores, in particular in commercial meat cutting and processing companies.

29. Use of the coating composition according to claims 1 to 10 as antimicrobial protective layer on surfaces in commercially or privately used rooms, in particular hospitals, homes for the elderly, meat cutting companies, food production plants, canteen kitchens and in vehicles, in particular airplanes, buses, ships, trains and trams.

30. Use of the coating composition according to claims 1 to 10 as antimicrobial protective layer on production machines in food industry.

31. Coating according to any of claims 11 to 14, **characterized in that** there is a stretchability of up to 250 % with respect to the original size.

## Revendications

1. Composition de revêtement, comportant 50 % à 99 % en poids, de préférence de 80 % à 99 % en poids, d'un agent générateur de SiO₂, le revêtement contenant de 0,1 % à 50 % en poids, de préférence de 1 % à 20 % en poids, par rapport à l'ensemble de la composition, comprenant des agents antibactériels, **caractérisée en ce que** les agents antibactériel est choisi parmi au moins 2 composés des classes suivantes sous forme de chitosanes et dérivés de chitosanes cationiques, anioniques ou non ioniques déacétylés et / ou de phénols du groupe de dihydroxydiphénylméthane halogéné, dihydroxydiphenylméthane sulfure et dihydroxydiphenylméthane éther et / ou de sels d'ammonium quaternaires de l'acide phosphorique alkylé.

2. Composition selon la revendication 1, **caractérisée en ce que** l'agent générateur de SiO₂ est choisi parmi
- 0 à 100 % en poids, de préférence 1 à 99 % en poids, de tétraéthoxysilane,
- 0 à 100 % en poids, de préférence 1 à 99 % en poids, detriméthoxyméthylsilane et
- 0 à 100 % en poids, de préférence 1 à 99 % en poids, de diméthoxydiméthylsilane.

3. Composition selon la revendication 1 ou 3, **caractérisée en ce que** l'agent générer SiO₂ contient en outre jusqu'à 20 % en poids Al₂O₃, TiO₂, ZrO₂, MgO et/ou de V₂O₅, ces additifs sont présent dans une quantité quelconque, de préférence entre 1 % et 50 % en poids, des groupes Al₂O₃, TiO₂, ZrO₂, MgO et V₂O₅, préféré notamment dans une dosage de 1 % en poids à 20 % en poids de la groupe Al₂O₃, TiO₂ et ZrO₂.

4. Composition selon la revendication 1, **caractérisé en ce que** le dihydroxydiphénylméthane halogéné, le dihydroxydiphenylméthane sulfure et le dihydroxydiphenylméthane éther est choisi parmi le 5,5'-dichloro-2,2'-dihydroxydiphénylméthane, le 3,5,3',5'-tétrachloro-4,4'-dihydroxydiphénylméthane, le 3,5,6,3',5',6'-hexachloro-2,2'-dihydroxydiphénylméthane, le sulfure de 5,5' dichloro-2,2'-dihydroxydiphényle, le sulfure de 2,4,5,2',4',5'-hexachlorodihydroxy-diphényle, le sulfure de 3,5,3',5'-tétrachloro-2,2'-hydroxydiphényle, le 4,4'-hydroxy-2,2'-diméthyldiphénylméthane, le 2',2-dihydroxy-5',5-diphényl éther ou le 2,2,4-trichloro-2'-hydroxydiphényl éther.

5. Composition selon les revendications 1 ou 4, **caractérisé en ce que** le phénol est le 2,4,4'-trichloro-2'- hydroxydiphényl éther.

6. Composition selon la revendication 1, **caractérisé en ce qu'**il s'agit de chitosanes ou de dérivés de chitosanes cationiques, anioniques ou non ioniques déacétylés, de préférence de chlorure de triméthylchitosanium, de l'iodure de diméthyl-N-*C₂* à *C₁₂*-alkylchitosanium, des sels quaternaires du chitosane avec des anions d'acide phosphorique, des sels de sodium de la *O-*carboxyméthylchitine, du *O*-acylchitosane, du *N*,*O*-acylchitosane, du N-3trimethylammonium-2-hydroxypropylchitosane et de l'iodure de la *O*-TEAE chitine.

7. Composition selon une des revendications 1 ou 6, **caractérisé en ce que** les chisotanes et les dérivés de chitosanes sont des chitosanes et des dérivés de chitosanes de faible masse moléculaire, celle-ci se situant entre 1,0 x 10⁵ g/mol et 3,5 x 10⁶ g/mol, de préférence entre 2,5 x 10⁵ g/mol et 9,5 x 10⁵ g/mol.

8. Composition selon la revendication 1, **caractérisé en ce qu'**il s'agit de sels d'ammonium quaternaires de l'acide phosphorique alkylé, chacun des restes d'alkyle présentant indépendamment l'un de l'autre de 1 à 12 atomes de carbone et/ou des sels d'ammonium halogénés, de préférence le bromure de cetyltrimethylammonium, le chlorure de didecyldimethylammonium, le chlorure d'hexadecylpyridinium et le chlorure de polyoxyalkyltrialkylammonium.

9. Composition selon une des revendications 1 ou 4 à 8, **caractérisé en ce que** les agents antimicrobiens représentent entre 0,1 % et 99,9 % en poids du mélange, de préférence de 1 % à 99 % en poids, en particulier de 5 % à 95 % en poids.

10. Composition selon une des revendications 1 à 9 en outre comportant des matières auxiliaires et des additifs, notamment des catalyseurs de polycondensation et / ou des ions fluorures acides et basiques.

11. Set d'utilisation comportant la composition selon les revendications 1 à 10, avec matériel d'application pour le nettoyage et la préparation des substrats sur lesquels la couche doit être appliquée, également sous forme de lingettes en sachets individuels.

12. Revêtement antibactériel à l'échelle nanométrique, notamment de 50 à 500 nm, d' épaisseur et de préférence entre 120 et 250 nm d' épaisseur contenant une couche de SiO₂ polymérisée anorganique non poreuse, appliquée sur un matériau de support, le revêtement contenant de 0,1 % à 50 % en poids, de préférence de 1 % à 20 % en poids, d'au moins un agent antibactériel par rapport à l'ensemble de la composition, sous forme de chitosanes et dérivés de chitosanes cationiques, anioniques ou non ioniques déacétylés et/ou de phénols du groupe des dihydroxydiphénylméthanes halogénés, dihydroxydiphenylméthane sulfures et dihydroxydiphenylméthane éthers et / ou de sels d'ammonium quaternaires de l'acide phosphorique alkylé, **caractérisé en ce que** l'agent antibactériel est choisi parmi au moins 2 composés des 3 classes suivantes sous forme de chitosanes et dérivés de chitosanes cationiques, anioniques ou non ioniques déacétylés et / ou de phénols du groupe des dihydroxydiphénylméthanes halogéné, dihydroxydiphenylméthane sulfure et / ou dihydroxydiphenylméthane éther et / ou de sels d'ammonium quaternaires de l'acide phosphorique alkylé.

13. Revêtement selon la revendication 11, **caractérisé en ce que** la couche de SiO₂ est composée au moins en partie de R-SiOn et/ou R2-SiOn, R correspondant à hydrogène, alkyle, aryl-, epoxy-alkyle- ou aminoalkyle et n étant égal ou supérieur à 1,5.

14. Revêtement selon une des revendications 11 ou 12, **caractérisé en ce que** la couche de SiO₂ contient une quantité quelconque de Al₂O₃, TiO₂, ZrO₂, MgO et / ou de V₂O₅, de préférence entre 0,1 % et 50 % en poids des groupes Al₂O₃, TiO₂ et ZrO₂, MgO et de V₂O₅ notamment, préféré dans une quantité quelconque entre 1 % et 20 % en poids des groupes de Al₂O₃, TiO₂ et ZrO₂.

15. Revêtement selon les revendications 11 à 13 en tant que revêtement pour surfaces dures, en particulier comme agent anti-fouling.

16. Revétement selon les revendications 11 à 13 en tant que revêtement pour aquariums et terrariums, en particulier pour les aquariums d'eau douce ou d'eau de mer.

17. Revêtement selon les revendications 11 à 13, **caractérisé en ce que** le matériau de support est composé de matières organiques, en particulier de laine, coton (cellulose), textiles, papier, carton de différentes qualité, d'éponge naturelle ou artificielle, cuir, bois et matières plastiques.

18. Revêtement selon les revendications précédentes 11 à 13 sous forme d'un revêtement d'emballage.

19. Revêtement selon les revendications 11 à 13, **caractérisé en ce que** le matériau de support est composé de matières anorganiques, en particulier de métal, verre, minéraux artificiels, tels que le béton, les tuiles, le carrelage, les façades ou le crépi.

20. Revêtement selon les revendications 11 à 13, **caractérisé en ce que** le matériau de support contient des composites, tels que les plastiques renforcés de fibre de verre et / ou les composites métal et plastique.

21. Revêtement selon les revendications précédentes 11 à 13, **caractérisé en ce que** le matériau de support contient des fibres artificielles, des microfibres, du feutre et des tissus, en particulier en polyester, polypropylène, polyéthylène haute densité, polyéthylène faible densité, polyacrylonitrile, polyamide, polyimide, polyaramide, aramide, méta-aramide, para-aramide, polytétrafluoréthylène, fluorure de polyvinylidène, sulfure de polyphénylène.

22. Procédé pour la fabrication d'un revêtement selon les revendications 11 à 13, **caractérisé en ce que**
a. dans une première phase du procédé un sol-gel est fabriqué avec des particules à l'échelle nanométrique de manière déjà connue par l'hydrolyse d'un précurseur dans l'eau et
b. dans une deuxième phase du procédé, les agents antimicrobiens selon les revendications 1 ou 4 à 9 dissous / dispersés dans un solvant hydrophile sont ajoutés à l'eau saline.

23. Procédé selon la revendication 22, **caractérisé en ce que** le précurseur est choisi parmi le groupe des alkyltriéthoxysilanes et des aminopropyltriéthoxysilanes, auxquels ont été ajoutés jusqu'à en poids de Al₂O₃, TiO₂, ZrO₂, MgO et/ou de V₂O₅ par rapport à la quantité totale de SiO2, et que la mise en oeuvre a lieu dans les 0,5 à 72 heures à une température allant de 5° à 20° C.

24. Procédé selon la revendication 23, **caractérisé en ce que** le solvant hydrophile est composé d'eau et/ou d'alcools linéaires ou non linéaires avec jusqu'à 6 atomes de carbone, notamment d'alcools contenant de l'eau et en particulier de l'éthanol.

25. Procédé destiné à appliquer la composition de revêtement obtenue selon une des revendications 1 à 10 sur le matériau de support selon les revendications 15 à 21 par contact avec la surface, notamment par pulvérisation, immersion, centrifugation, peinture, arrosage, foulardage, coulage du film, pulvérisation par rampe avec au moins une buse.

26. Utilisation de la composition de revêtement selon les revendications 1 à 10 en tant qu'agent anti-fouling pour les surfaces exposées à l'eau et en particulier à l'eau de mer et de lac.

27. Utilisation de la composition de revêtement selon les revendications 1 à 10 sur / dans les emballages, tels que les cartonnages à base de papier et de carton ou de textiles et tissus ou tissus maille.

28. Utilisation de la composition de revêtement selon les revendications 1 à 10 en tant que film de protection antimicrobien pour les réfrigérateurs, les congélateurs et les chambres froides, en particulier dans les entreprises de découpe et de traitement de produits animaux.

29. Utilisation de la composition de revêtement selon les revendications 1 à 10 en tant que film de protection antimicrobien pour les surfaces situées dans des locaux à utilisation professionnelle ou privée, en particulier dans les hôpitaux, les maisons de retraite, les entreprises de traitement de produits animaux, les installations de production alimentaire, les cuisines industrielles et dans les véhicules, notamment les avions, les bus et cars, les bateaux, les trains et les tramways.

30. Utilisation de la composition de revêtement selon les revendications 1 à 10 en tant que film de protection antimicrobien pour les dispositifs de production dans l'industrie alimentaire.

31. Revêtement selon une des revendications 11 à 14, **caractérisé par** une ductilité de 250 % par rapport à la taille initiale.
